# EUROPEAN PATENT APPLICATION

(11) **EP 4 550 122 A1**
(43) Date of publication of application: **07.05.2025**
(21) Application number: 22953408.6
(22) Date of filing: 30.07.2022
(51) Int. Cl.: G06F 8/65, H04W 4/50

(54) **UPGRADE METHOD AND SYSTEM**

(71) Applicant: Shenzhen Yinwang Intelligent Technologies Co., Ltd., Shenzhen, Guangdong 518129 (CN)
(72) Inventor: JIANG, Haiying, Shenzhen, Guangdong 518129 (CN); YU, Yinghui, Shenzhen, Guangdong 518129 (CN); ZHENG, Juan, Shenzhen, Guangdong 518129 (CN); ZHOU, Zheng, Shenzhen, Guangdong 518129 (CN)
(74) Representative: Gill Jennings & Every LLP
(86) International application number: PCT/CN2022/109299
(87) International publication number: WO 2024/026591

(57) **Abstract**

An update method and system are applied to the field of intelligent vehicle technologies. The method may include: obtaining a trip plan of a vehicle, where the trip plan includes a trip element; and sending a first update recommendation scheme corresponding to the trip plan, where the first update recommendation scheme indicates at least update information recommended to the vehicle. According to embodiments of this application, update recommendation can be actively implemented from a perspective of a trip. Based on a trip element of a user, different update information can be recommended based on different user trips, so that trip experience of the user can be effectively improved.

## Description

### TECHNICAL FIELD

This application relates to the field of intelligent vehicle technologies, and in particular, to an update method and system.

### BACKGROUND

An over the air (over the air, OTA) technology is a technology for downloading data through a wireless network, and is widely used in update of devices such as vehicles, televisions, mobile phones, tablet computers, and set-top boxes currently. In the OTA technology, automatic update is performed mainly by downloading an OTA update package. The OTA technology has a high update speed and has small impact on a use process of a user. Therefore, OTA update becomes a main manner for function update of a terminal. For example, for a vehicle, a vehicle manufacturer or an original equipment manufacturer (original equipment manufacturer, OEM) updates related hardware or software of the vehicle by using the OTA technology. This helps the manufacturer reduce recall costs, quickly respond to a requirement, and improve user experience.

As there are more vehicle-related services, a vehicle user has more personalized requirements for functions provided by a vehicle. How to meet a personalized requirement of a vehicle user for a vehicle function by using the OTA technology is a hot issue being studied by a person skilled in the art.

### SUMMARY

Embodiments of this application provide an update method and system, to actively recommend update information to a vehicle from a perspective of a trip, so as to meet a requirement of a user for a vehicle function in different trip plans, and effectively improve user experience.

According to a first aspect, an embodiment of this application provides an update method, including:
obtaining a trip plan of a vehicle, where the trip plan includes a trip element; and
sending a first update recommendation scheme corresponding to the trip plan, where the first update recommendation scheme indicates at least update information recommended to the vehicle.

It may be understood that the vehicle may be replaced with a terminal device, and the terminal device may be a mobile terminal or a transport means like an uncrewed aerial vehicle, a flying car, a ship, or a mobile robot.

In embodiments of this application, an update recommendation scheme can be actively provided from a perspective of a trip. Because the update recommendation scheme corresponds to a trip plan of a vehicle, different update recommendation schemes can be recommended based on different user trips, to meet a requirement of a user for a vehicle function in different trip plans, so that use experience of a passenger can be effectively improved, and a personalized requirement of the vehicle user for the vehicle function can be met.

In a possible implementation, the update information includes information about at least one software update package. The information about the at least one software update package may include one or more of an identity (identity, ID) of the software update package, a number, download permission, a download process, an image file, the at least one software update package, and the like. For example, the information about the at least one software update package is the image file of the at least one software update package, and the vehicle may install the at least one software update package by using the image file, that is, may use software corresponding to the at least one software update package.

The information about the at least one software update package is recommended to the vehicle, so that the user conveniently performs an update operation for the at least one software update package on the vehicle based on the information, to use the software corresponding to the at least one software update package, thereby meeting a personalized requirement of the vehicle user for the vehicle function.

In another possible implementation, the update information includes information for indicating to download the at least one software update package. For example, the update information includes a download address, and the vehicle may download the at least one software update package by using the download address, and may use software corresponding to the at least one software update package after downloading and installation.

The information for indicating to download the at least one software update package is recommended to the vehicle, so that the user downloads and installs the at least one software update package based on the information, to use the software corresponding to the at least one software update package, thereby meeting a personalized requirement of the vehicle user for the vehicle function.

It should be noted that the information about the at least one software update package and the information for indicating to download the at least one software update package may include some same information. Information content included in the information about the at least one software update package and the information for indicating to download the at least one software update package is not strictly limited in embodiments of this application. For example, in some scenarios, the information about the at least one software update package may be considered as the information for indicating to download the at least one software update package.

In another possible implementation, the update information includes information for indicating to activate the at least one software update package. For example, the update information includes one or more of permission, a key, a license, or the like of at least one piece of software. In this case, the software usually has been installed in the vehicle, but the software is not activated. The update information may be used to activate the software corresponding to the software update package.

The information for indicating to activate the at least one software update package is recommended to the vehicle, so that the user activates the at least one software update package based on the information, to use the software corresponding to the at least one software update package, thereby meeting a personalized requirement of the vehicle user for the vehicle function.

In a possible implementation, the update information includes information for indicating to activate the at least one software update package in the vehicle. For example, the update information may include vehicle information and the like, to indicate to activate the software update package in the vehicle.

In another possible implementation, the update information includes information about at least one piece of hardware. For example, the at least one piece of hardware may be an identity ID, a number, a specification model, or the like of the hardware. For example, the information about the at least one piece of hardware is the specification model of the at least one piece of hardware. The vehicle may obtain the at least one piece of hardware based on the specification model and install the at least one piece of hardware, that is, may use the at least one piece of hardware.

The information about the at least one piece of hardware is recommended to the vehicle, so that the user installs the at least one piece of hardware based on the information, to use the at least one piece of hardware, thereby meeting a personalized requirement of the vehicle user for the vehicle function.

In a possible implementation, the method further includes:
determining the first update recommendation scheme based on the trip plan and information about the vehicle.

In the foregoing implementation, the update recommendation scheme is obtained based on the trip plan and the information about the vehicle. In this way, it can be ensured that the update information is applicable to the vehicle and the trip plan. In this way, trip experience of the user can be improved.

In another possible implementation, the trip element includes one or more of the following:
a start date of a trip, an end date of the trip, a departure place of the trip, a destination of the trip, weather in the trip, a travel distance, driver information, passenger information, a goal of the trip, a usage purpose of the vehicle, time information corresponding to the usage purpose, and the like.

The update recommendation scheme is provided based on the trip element in the trip plan. From a perspective of a trip, different update recommendation schemes may be recommended based on different user trips, so that a personalized requirement of the vehicle user for the vehicle function can be met.

In another possible implementation, the information about the vehicle includes one or more of a vehicle model, a hardware configuration, a software configuration, resource information, or the like. The resource information includes one or more of an attribute of a resource, usage of the resource, configuration information of the resource, or the like. The resource mentioned herein includes but is not limited to a computing resource, a storage resource, a network resource, and the like. For example, the resource information includes the usage of the resource. The resource information may specifically indicate a current remaining resource, a used resource, or the like. For example, an in-vehicle chip may be considered as a resource. When the vehicle includes the in-vehicle chip, the resource information may include computing power of the in-vehicle chip, remaining computing power of the in-vehicle chip, or the like. For example, memory in the vehicle may be considered as a resource. When the vehicle includes specific memory, the resource information may include a remaining capacity of the memory or the like.

Update recommendation is performed by considering the information about the vehicle. In this way, it can be ensured that the update information is applicable to the vehicle, to improve user experience.

In another possible implementation, the method further includes:
determining an implementation strategy of the first update recommendation scheme; and
sending the implementation strategy to the vehicle.

The implementation strategy indicates implementation of the first update recommendation scheme. For example, the implementation strategy indicates a download sequence position of a first software update package. The first software update package is included in an update package corresponding to the update information.

For another example, the implementation strategy indicates an installation sequence position of a first software update package.

For another example, the implementation strategy indicates an activation sequence position of a first software update package.

For another example, the implementation strategy indicates an installation sequence position of first hardware. The first hardware is hardware recommended to be installed on the vehicle.

**In** embodiments of this application, the implementation strategy is obtained based on at least one of a download sequence position of a software update package, an installation sequence position of the software update package, an activation sequence position of the software update package, and an installation sequence position of hardware, so that the vehicle completes ordered update. In this way, it can be ensured that the vehicle completes update orderly, to further improve trip experience of the user.

**In** another possible implementation, the download sequence position of the first software update package is associated with a priority corresponding to the first software update package, time information of the trip plan, and update duration corresponding to the first software update package.

**In** another possible implementation, the installation sequence position of the first software update package is associated with a priority corresponding to the first software update package, time information of the trip plan, and update duration corresponding to the first software update package.

**In** another possible implementation, the activation sequence position of the first software update package is associated with a priority corresponding to the first software update package, time information of the trip plan, and update duration corresponding to the first software update package.

**In** another possible implementation, the installation sequence position of the first hardware is associated with a priority corresponding to the first hardware and time information of the trip plan.

The first software update package is included in the at least one software update package, and the first hardware is included in the at least one piece of hardware.

The download sequence position, the installation sequence position, the activation sequence position, or the like of the software update package is determined based on the priority corresponding to the software update package, the time information of the trip plan, and the update duration corresponding to the software update package, and the installation sequence position of the first hardware is determined based on the priority corresponding to the first hardware and the time information of the trip plan, so that software or hardware with a high priority can be preferentially updated, to improve trip experience of the user.

**In** another possible implementation, the method further includes:
sending information associated with a first moment. For example, the information associated with the first moment may be one or more of a time point, a timestamp, a timer, or the like of the first moment.

Optionally, the first moment is a moment at which the vehicle is recommended to start the trip plan. For example, it is recommended to start the trip at "7 o'clock tomorrow morning", and "7 o'clock tomorrow morning" is the first moment.

Optionally, the first moment is a moment not earlier than a second moment, the second moment is an effective moment of a second software update package or second hardware, the second software update package is included in the at least one software update package, and the second hardware is included in the at least one piece of hardware. In this way, it can be ensured that the vehicle departs after the second software update package or the second hardware takes effect, so that software corresponding to the second software update package and/or the second hardware are/is used in the trip. This helps improve trip experience of the user.

**In** another possible implementation, a priority of the second software update package is higher than or equal to a first priority; and/or a priority of the second hardware is higher than or equal to a second priority.

For example, if some software update packages have a relatively high installation level or importance level, or some hardware has a relatively high installation level or importance level, the vehicle is recommended to depart after the software update packages are installed or activated or depart after the hardware is installed. In this way, trip experience of the user can be effectively improved.

In another possible implementation, the method further includes:
obtaining feedback data, where the feedback data indicates at least a status of the vehicle and/or a status of a passenger in the vehicle; and
sending, based on the feedback data, a second update recommendation scheme corresponding to the trip plan.

In embodiments of this application, the feedback data is obtained, and then the second update recommendation scheme corresponding to the trip plan is sent. An algorithm is continuously optimized, so that the recommended update information can be more reliable and comprehensive, and then trip experience of the user can be effectively improved.

In a possible implementation, the sending a second update recommendation scheme corresponding to the trip plan includes: updating an update recommendation scheme corresponding to the trip plan to obtain the second update recommendation scheme, and sending the updated second update recommendation scheme corresponding to the trip plan.

In another possible implementation, the sending a second update recommendation scheme corresponding to the trip plan includes: generating the second update recommendation scheme based on the feedback data, and sending the second update recommendation scheme.

In another possible implementation, the feedback data includes one or more of the following data:
sensing information of the vehicle, traveling data of the vehicle, or use information of target software.

For example, the sensing information of the vehicle includes one or more of sound information, image information, video information, or the like in the vehicle.

For example, the traveling data of the vehicle includes one or more of a quantity of abnormal driving operations, an occurrence frequency of an abnormal driving operation, energy consumption, or the like. The abnormal driving operation is an abnormal operation, an operation with a relatively high risk coefficient, or an operation that is prone to an accident in a driving process. For example, the abnormal driving operation may include one or more of emergency braking, emergency steering, or the like. In a specific process, whether an operation is an abnormal driving operation may be determined by using a pre-defined or preconfigured determining rule. The pre-definition may mean definition performed by an individual or an organization like a user, a vendor, or a standard organization. The foregoing energy consumption includes one or more of fuel consumption, power consumption, or the like.

For example, the target software corresponds to a target software update package. The target software update package is included in the software update package corresponding to the update information. In addition, the target software update package is an installed and/or activated software update package. The use information of the target software includes one or more of implementation time, an implementation process, an implementation result, and the like of each piece of software in the target software.

The feedback data is obtained based on one or more of the sensing information of the vehicle, the traveling data of the vehicle, the use information of the target software, or the like. This can ensure that the obtained feedback information is more reliable, thereby helping update the update recommendation scheme.

In a possible implementation, the trip element includes information indicating passenger health, the update information includes information about a second software update package, the third software update package is included in the at least one software update package, and the third software update package is at least used for life and health monitoring.

**In** this way, software related to passenger health can be recommended to the vehicle to improve a life and health detection function of the vehicle, so that a passenger can receive more attention in the trip. Even, life and health detection can give an early warning when the passenger is in danger, to provide more reaction time for an accompanying passenger. In conclusion, in the foregoing implementation, passenger safety can be effectively ensured.

**In** a possible implementation, the trip element includes a trip element indicating a driving mode. The driving mode may be unmanned driving, single-person driving, multi-person driving, or the like. Single-person driving means that one driver drives the vehicle to complete the trip. Further, based on whether there is another accompanying member in addition to the driver in the vehicle, single-person driving may be further classified into single-person unaccompanied driving, single-person accompanied driving, and the like.

In this case, the update information may include information about a fourth software update package. The fourth software update package is related software provided for the vehicle for the driving mode. In a possible implementation, the trip element includes a trip element indicating that the vehicle is driven by a single person, the update information includes the information about the fourth software update package, the fourth software update package is included in the at least one software update package, and the fourth software update package is at least used for one or more of driver status detection, voice communication, and the like.

In a single-person driving state, the driver may be tired or distracted. This may cause a safety risk in the trip. However, in the foregoing implementation, the update information may be used to recommend to install applicable software in the vehicle in a single-person driving scenario. The software helps improve a driving status of the driver and ensure personal and property safety of the driver.

**In** a possible implementation, the trip element includes a trip element indicating a travel route, the update information includes information about a fifth software update package, the fifth software update package is included in the at least one software update package, and the fifth software update package is at least used to implement assisted driving corresponding to the travel route.

**In** this way, an intelligent driving function of the vehicle can be improved, so that a driving burden of the driver can be reduced in a trip, for example, on an expressway or a mountain road, to improve driving experience.

In a possible implementation, the trip element includes a trip element indicating a passenger hobby, the update information includes information about a sixth software update package, the sixth software update package is included in the at least one software update package, and the sixth software update package is associated with the passenger hobby.

In this way, the software update package associated with the passenger hobby is recommended, to improve trip entertainment experience of the passenger.

In a possible implementation, the update information includes information about a seventh software update package, the seventh software update package is included in the at least one software update package, a function corresponding to the seventh software update package is implemented based on a first hardware set of the vehicle, and the first hardware set includes target hardware that is supported by the vehicle and that is not configured.

In this way, related hardware supported by the vehicle may be installed in the vehicle. For example, the vehicle has hardware plug-in interfaces of front, rear, and side sensors such as a LiDAR or a camera. The corresponding hardware is installed, to improve a function of the vehicle in facilitating driving of the user, so that a driving burden of the driver can be reduced in the trip, and driving experience can be improved. In conclusion, in the foregoing implementation, driving experience of the user can be improved.

In a possible implementation, the method further includes:
sending first information, where the first information indicates use end time of the target software, the use end time is associated with the time information of the trip plan, the target software corresponds to the target software update package, the target software update package is included in the software update package corresponding to the update information, and the target software update package is an installed and/or activated software update package.

After the use end time, the target software is uninstalled or deactivated. This can help reduce software usage costs of the user.

In a possible implementation, the obtaining a trip plan of a vehicle includes:
receiving data from one or more of user equipment, the vehicle, a device associated with the vehicle, or the like; and
obtaining the trip plan based on the data.

In embodiments of this application, the data related to the trip plan is obtained from the user equipment, the vehicle, the device associated with the vehicle, or the like, to obtain the trip plan. In this way, accuracy and comprehensiveness of information about the trip plan can be ensured. This helps obtain an update recommendation scheme with relatively high reliability.

For example, the user enters the trip plan of the vehicle by using a device, and an update recommendation scheme can be provided for the vehicle based on the trip plan, to implement vehicle function update applicable to the trip. The user does not need to perform software search and software download in the vehicle, so that service quality of the vehicle is improved, and a requirement of the user for a personalized function is met.

According to a second aspect, an embodiment of this application provides an update method, applied to a vehicle and including:
receiving a first update recommendation scheme corresponding to a trip plan of the vehicle, where the first update recommendation scheme indicates at least update information recommended to the vehicle; and
performing an update operation based on the first update recommendation scheme.

**In** embodiments of this application, the update operation can be performed based on the received update recommendation scheme corresponding to the trip plan of the vehicle. Because the recommended update information corresponds to the trip plan of the vehicle, a requirement of a user for a vehicle function in the current trip plan can be met, and experience of using the vehicle by the user can be improved.

**In** a possible implementation, the update information includes information about at least one software update package. The information about the at least one software update package may include one or more of an identity ID of the software update package, a number, download permission, a download process, an image file, the at least one software update package, and the like. For example, the information about the at least one software update package is the image file of the at least one software update package, and the vehicle may install the at least one software update package by using the image file, that is, may use software corresponding to the at least one software update package.

**In** another possible implementation, the update information includes information for indicating to download the at least one software update package. For example, the update information includes a download address, and the vehicle may download the at least one software update package by using the download address, and may use software corresponding to the at least one software update package after downloading and installation.

It should be noted that the information about the at least one software update package and the information for indicating to download the at least one software update package may include some same information. Information content included in the information about the at least one software update package and the information for indicating to download the at least one software update package is not strictly limited in embodiments of this application. For example, in some scenarios, the information about the at least one update package may be considered as the information for indicating to download the at least one software update package.

**In** another possible implementation, the update information includes information for indicating to activate the at least one software update package. For example, the update information includes one or more of permission, a key, a license, authentication information, and the like of at least one piece of software. In this case, the software usually has been installed in the vehicle, but the software is not activated. The update information may be used to activate the software corresponding to the software update package.

**In** another possible implementation, the update information includes information about at least one piece of hardware. For example, the at least one piece of hardware may be an identity ID, a number, a specification model, or the like of the hardware. For example, the information about the at least one piece of hardware is the specification model of the at least one piece of hardware. The vehicle may obtain the at least one piece of hardware based on the specification model and install the at least one piece of hardware, that is, may use the at least one piece of hardware.

**In** a possible implementation, the first update recommendation scheme is associated with the trip plan and information about the vehicle.

**In** the foregoing implementation, the update recommendation scheme is obtained based on the trip plan and the information about the vehicle. In this way, it can be ensured that the update information is applicable to the vehicle and the trip plan. In this way, trip experience of the user can be improved.

**In** another possible implementation, a trip element includes one or more of the following:
a start date of a trip, an end date of the trip, a departure place of the trip, a destination of the trip, weather in the trip, a travel distance, driver information, passenger information, a goal of the trip, a usage purpose of the vehicle, time information corresponding to the usage purpose, and the like.

**In** another possible implementation, the information about the vehicle includes at least one of a vehicle model, a hardware configuration, a software configuration, resource information, or the like. The resource information includes an attribute of a resource, usage of the resource, configuration information of the resource, or the like. The resource mentioned herein includes but is not limited to a computing resource, a storage resource, a network resource, and the like. For example, the resource information includes the usage of the resource. The resource information may specifically indicate a current remaining resource, a used resource, or the like. For example, an in-vehicle chip may be considered as a resource. When the vehicle includes the in-vehicle chip, the resource information may include computing power of the in-vehicle chip, remaining computing power of the in-vehicle chip, or the like. For example, memory in the vehicle may be considered as a resource. When the vehicle includes specific memory, the resource information may include a remaining capacity of the memory or the like.

In another possible implementation, the method further includes:
receiving an implementation strategy of the first update recommendation scheme.

The implementation strategy indicates implementation of the first update recommendation scheme. For example, the implementation strategy indicates a download sequence position of a first software update package. The first software update package is included in an update package corresponding to the update information.

For another example, the implementation strategy indicates an installation sequence position of a first software update package. The first software update package is included in an update package corresponding to the update information.

For another example, the implementation strategy indicates an activation sequence position of a first software update package. The first software update package is included in an update package corresponding to the update information.

For another example, the implementation strategy indicates an installation sequence position of first hardware. The first hardware is hardware recommended to be installed on the vehicle.

In embodiments of this application, the implementation strategy is obtained based on at least one of a download sequence position of a software update package, an installation sequence position of the software update package, an activation sequence position of the software update package, and an installation sequence position of hardware, so that the vehicle completes ordered update. In this way, it can be ensured that the vehicle completes update orderly, to further improve trip experience of the user.

In another possible implementation, the download sequence position of the first software update package is associated with a priority corresponding to the first software update package, time information of the trip plan, and update duration corresponding to the first software update package.

In another possible implementation, the installation sequence position of the first software update package is associated with a priority corresponding to the first software update package, time information of the trip plan, and update duration corresponding to the first software update package.

In another possible implementation, the activation sequence position of the first software update package is associated with a priority corresponding to the first software update package, time information of the trip plan, and update duration corresponding to the first software update package.

In another possible implementation, the installation sequence position of the first hardware is associated with a priority corresponding to the first hardware and time information of the trip plan.

The first software update package is included in the at least one software update package, and the first hardware is included in the at least one piece of hardware.

The download sequence position, the installation sequence position, the activation sequence position, or the like of the software update package is determined based on the priority corresponding to the software update package, the time information of the trip plan, and the update duration corresponding to the software update package, and the installation sequence position of the first hardware is determined based on the priority corresponding to the first hardware and the time information of the trip plan, so that software or hardware with a high priority can be preferentially updated, to improve trip experience of the user.

In another possible implementation, the method further includes:
receiving information associated with a first moment. For example, the information associated with the first moment may be one or more of a time point, a timestamp, a timer, or the like.

Optionally, the first moment is a moment at which the vehicle is recommended to start the trip plan. For example, it is recommended to start the trip at "7 o'clock tomorrow morning", and "7 o'clock tomorrow morning" is the first moment.

Optionally, the first moment is a moment not earlier than a second moment, the second moment is an effective moment of a second software update package or second hardware, the second software update package is included in the at least one software update package, and the second hardware is included in the at least one piece of hardware. In this way, it can be ensured that the vehicle departs after the second software update package or the second hardware takes effect, so that software corresponding to the second software update package and/or the second hardware are/is used in the trip. This helps improve trip experience of the user.

In another possible implementation, a priority of the second software update package is higher than or equal to a first priority; and/or a priority of the second hardware is higher than or equal to a second priority.

For example, if some software update packages have a relatively high installation level or importance level, or some hardware has a relatively high installation level or importance level, the vehicle is recommended to depart after the software update packages are installed or activated or depart after the hardware is installed. In this way, trip experience of the user can be effectively improved.

In another possible implementation, the method further includes:
receiving a second update recommendation scheme.

Optionally, the second update recommendation scheme is associated with feedback data, and the feedback data indicates at least a status of the vehicle and/or a status of a passenger in the vehicle.

In embodiments of this application, the feedback data is obtained, and then the second update recommendation scheme corresponding to the trip plan is sent. An algorithm is continuously optimized, so that the recommended update information can be more reliable and comprehensive, and then trip experience of the user can be effectively improved.

**In** another possible implementation, the feedback data includes one or more of the following data:
sensing information of the vehicle, traveling data of the vehicle, or use information of target software.

For example, the sensing information of the vehicle includes one or more of sound information, image information, video information, or the like in the vehicle.

For example, the traveling data of the vehicle includes one or more of a quantity of abnormal driving operations, an occurrence frequency of an abnormal driving operation, energy consumption, or the like. The abnormal driving operation is an abnormal operation, an operation with a relatively high risk coefficient, or an operation that is prone to an accident in a driving process. For example, the abnormal driving operation may include one or more of emergency braking, emergency steering, or the like. In a specific process, whether an operation is an abnormal driving operation may be determined by using a pre-defined or preconfigured determining rule. The pre-definition may mean definition performed by an individual or an organization like a user, a vendor, or a standard organization. The foregoing energy consumption includes one or more of fuel consumption, power consumption, or the like.

For example, the target software corresponds to a target software update package. The target software update package is included in the software update package corresponding to the update information. In addition, the target software update package is an installed and/or activated software update package. The use information of the target software includes one or more of implementation time, an implementation process, and an implementation result of each piece of software in the target software.

In a possible implementation, the trip element includes information indicating passenger health, the update information includes information about a third software update package, the third software update package is included in the at least one software update package, and the third software update package is at least used for life and health monitoring.

In this way, software related to passenger health can be recommended to the vehicle to improve a life and health detection function of the vehicle, so that a passenger can receive more attention in the trip. Even, life and health detection can give an early warning when the passenger is in danger, to provide more reaction time for an accompanying passenger. In conclusion, in the foregoing implementation, passenger safety can be effectively ensured.

In a possible implementation, the trip element includes a trip element indicating a driving mode. The driving mode may be unmanned driving, single-person driving, multi-person driving, or the like. Single-person driving means that one driver drives the vehicle to complete the trip. Further, based on whether there is another accompanying member in addition to the driver in the vehicle, single-person driving may be further classified into single-person unaccompanied driving, single-person accompanied driving, and the like.

In this case, the update information may include information about a fourth software update package. The fourth software update package is related software provided for the vehicle for the driving mode. In a possible implementation, the trip element includes a trip element indicating that the vehicle is driven by a single person, the update information includes the information about the fourth software update package, the fourth software update package is included in the at least one software update package, and the fourth software update package is at least used for one or more of driver status detection, voice communication, and the like.

In a single-person driving state, the driver may be tired or distracted. This may cause a safety risk in the trip. However, in the foregoing implementation, the update information may be used to recommend to install applicable software in the vehicle in a single-person driving scenario. The software helps improve a driving status of the driver and ensure personal and property safety of the driver.

In a possible implementation, the trip element includes a trip element indicating a travel route, the update information includes information about a fifth software update package, the fifth software update package is included in the at least one software update package, and the fifth software update package is at least used to implement assisted driving corresponding to the travel route.

In this way, an intelligent driving function of the vehicle can be improved, so that a driving burden of the driver can be reduced in a trip, for example, on an expressway or a mountain road, to improve driving experience.

In a possible implementation, the trip element includes a trip element indicating a passenger hobby, the update information includes information about a sixth software update package, the sixth software update package is included in the at least one software update package, and the sixth software update package is associated with the passenger hobby.

In this way, the software update package associated with the passenger hobby is recommended, to improve trip entertainment experience of the passenger.

In a possible implementation, the update information includes information about a seventh software update package, the seventh software update package is included in the at least one software update package, a function corresponding to the seventh software update package is implemented based on a first hardware set of the vehicle, and the first hardware set includes target hardware that is supported by the vehicle and that is not configured.

In this way, related hardware supported by the vehicle may be installed in the vehicle. For example, the vehicle has hardware plug-in interfaces of front, rear, and side sensors such as a LiDAR or a camera. The corresponding hardware is installed, to improve a function of the vehicle in facilitating driving of the user, so that a driving burden of the driver can be reduced in the trip, and driving experience can be improved. In conclusion, in the foregoing implementation, driving experience of the user can be improved.

In a possible implementation, the method further includes:
receiving first information, where the first information indicates use end time of the target software, the use end time is associated with the time information of the trip plan, the target software corresponds to the target software update package, and the target software update package is included in the software update package corresponding to the update information. In addition, the target software update package is an installed and/or activated software update package.

In a possible implementation, the trip plan of the vehicle is associated with data from one or more of user equipment, the vehicle, a device associated with the vehicle, or the like.

In embodiments of this application, the data related to the trip plan is obtained from the user equipment, the vehicle, the device associated with the vehicle, or the like, to obtain the trip plan. In this way, accuracy and comprehensiveness of information about the trip plan can be ensured. This helps obtain an update recommendation scheme with relatively high reliability.

For example, the user enters the trip plan of the vehicle by using a device, and an update recommendation scheme can be provided for the vehicle based on the trip plan, to implement vehicle function update applicable to the trip. The user does not need to perform software search and software download in the vehicle, so that service quality of the vehicle is improved, and a requirement of the user for a personalized function is met.

According to a third aspect, an embodiment of this application provides an update apparatus, including:
an obtaining unit, configured to obtain a trip plan of a vehicle, where the trip plan includes a trip element; and
a sending unit, configured to send a first update recommendation scheme corresponding to the trip plan, where the first update recommendation scheme indicates at least update information recommended to the vehicle.

In a possible implementation, the update information includes one or more of information about at least one software update package, information for indicating to download the at least one software update package, information for indicating to activate the at least one software update package, and information about at least one piece of hardware, the at least one software update package is a software update package recommended to be installed on the vehicle, and the at least one piece of hardware is hardware recommended to be installed on the vehicle.

In a possible implementation, the apparatus further includes a first determining unit, configured to:
determine the first update recommendation scheme based on the trip plan and information about the vehicle.

In a possible implementation, the trip element includes one or more of the following:
a start date of a trip, an end date of the trip, a departure place of the trip, a destination of the trip, weather in the trip, a travel distance, driver information, passenger information, a goal of the trip, and a usage purpose of the vehicle.

In a possible implementation, the information about the vehicle includes one or more of a vehicle model, a hardware configuration, a software configuration, and resource information.

In a possible implementation, the apparatus further includes a second determining unit, configured to:
determine an implementation strategy of the first update recommendation scheme, where the implementation strategy indicates one or more of a download sequence position of the at least one software update package, an installation sequence position of the at least one software update package, an activation sequence position of the at least one software update package, and an installation sequence position of the at least one piece of hardware, and the software update package is included in an update package corresponding to the update information.

The sending unit is further configured to send the implementation strategy to the vehicle.

In a possible implementation, a download sequence position of a first software update package is associated with a priority corresponding to the first software update package, time information of the trip plan, and update duration corresponding to the first software update package; or
an installation sequence position of a first software update package is associated with a priority corresponding to the first software update package, time information of the trip plan, and update duration corresponding to the first software update package; or
an activation sequence position of a first software update package is associated with a priority corresponding to the first software update package, time information of the trip plan, and update duration corresponding to the first software update package; or
an installation sequence position of first hardware is associated with a priority corresponding to the first hardware and time information of the trip plan; and
the first software update package is included in the at least one software update package, and the first hardware is included in the at least one piece of hardware.

In a possible implementation, the sending unit is further configured to:
send information associated with a first moment, where the first moment is a moment at which the vehicle is recommended to start the trip plan, the first moment is a moment not earlier than a second moment, and the second moment is an effective moment of a second software update package or second hardware. The second software update package is included in the at least one software update package, and the second hardware is included in the at least one piece of hardware. In this way, it can be ensured that the vehicle departs after the second software update package or the second hardware takes effect, so that software corresponding to the second software update package and/or the second hardware are/is used in the trip. This helps improve trip experience of the user.

In another possible implementation, a priority of the second software update package is higher than or equal to a first priority; and/or a priority of the second hardware is higher than or equal to a second priority.

In a possible implementation, the obtaining unit is further configured to:
obtain feedback data, where the feedback data indicates at least a status of the vehicle and/or a status of a passenger in the vehicle; and
send, based on the feedback data, a second update recommendation scheme corresponding to the trip plan.

In a possible implementation, the feedback data includes one or more of the following data:
sensing information of the vehicle, traveling data of the vehicle, or use information of target software.

The sensing information of the vehicle includes one or more of sound information, image information, and video information in the vehicle.

The traveling data of the vehicle includes one or more of a quantity of abnormal driving operations, an occurrence frequency of an abnormal driving operation, and energy consumption, the abnormal driving operation includes one or more of emergency braking and emergency steering, and the energy consumption includes one or more of fuel consumption and power consumption.

The target software corresponds to a target software update package, the target software update package is included in the software update package corresponding to the update information, the target software update package is an installed and/or activated software update package, and the use information of the target software includes one or more of implementation time, an implementation process, and an implementation result of each piece of software in the target software.

**In** a possible implementation, the trip element includes information indicating passenger health, the update information includes information about a third software update package, the third software update package is included in the at least one software update package, and the third software update package is at least used for life and health monitoring.

**In** a possible implementation, the trip element includes a trip element indicating that the vehicle is driven by a single person, the update information includes information about a fourth software update package, the fourth software update package is included in the at least one software update package, and the fourth software update package is at least used for driver status detection and/or voice communication.

**In** a possible implementation, the trip element includes a trip element indicating a travel route, the update information includes information about a fifth software update package, the fifth software update package is included in the at least one software update package, and the fifth software update package is at least used to implement assisted driving corresponding to the travel route.

**In** a possible implementation, the trip element includes a trip element indicating a passenger hobby, the update information includes information about a sixth software update package, the sixth software update package is included in the at least one software update package, and the sixth software update package is associated with the passenger hobby.

**In** a possible implementation, the update information includes information about a seventh software update package, the seventh software update package is included in the at least one software update package, a function corresponding to the seventh software update package is implemented based on a first hardware set of the vehicle, and the first hardware set includes target hardware that is supported by the vehicle and that is not configured.

In a possible implementation, the sending unit is further configured to:
send first information, where the first information indicates use end time of the target software, the use end time is associated with the time information of the trip plan, the target software corresponds to the target software update package, the target software update package is included in the software update package corresponding to the update information, and the target software update package is an installed and/or activated software update package.

In a possible implementation, the obtaining unit is configured to:
receive data from one or more of user equipment, the vehicle, and a device associated with the vehicle; and
obtain the trip plan based on the data.

According to a fourth aspect, an embodiment of this application provides an update apparatus, including:
a receiving unit, configured to receive a first update recommendation scheme corresponding to a trip plan of a vehicle, where the first update recommendation scheme indicates at least update information recommended to the vehicle, the update information includes one or more of information about at least one software update package, information for indicating to download the at least one software update package, information for indicating to activate the at least one software update package, and information about at least one piece of hardware, the at least one software update package is a software update package recommended to be installed on the vehicle, and the at least one piece of hardware is hardware recommended to be installed on the vehicle; and
an execution unit, configured to perform an update operation based on the first update recommendation scheme.

In a possible implementation, the first update recommendation scheme is associated with the trip plan and information about the vehicle.

In a possible implementation, a trip element includes one or more of the following:
a start date of a trip, an end date of the trip, a departure place of the trip, a destination of the trip, weather in the trip, a travel distance, driver information, passenger information, a goal of the trip, and a usage purpose of the vehicle.

In a possible implementation, the information about the vehicle includes one or more of a vehicle model, a hardware configuration, a software configuration, and resource information.

In a possible implementation, the receiving unit is further configured to:
receive an implementation strategy of the first update recommendation scheme, where the implementation strategy indicates at least one of a download sequence position of the at least one software update package, an installation sequence position of the at least one software update package, an activation sequence position of the at least one software update package, and an installation sequence position of the at least one piece of hardware, and the at least one software update package is included in an update package corresponding to the update information.

In a possible implementation, a download sequence position of a first software update package is associated with a priority corresponding to the first software update package, time information of the trip plan, and update duration corresponding to the first software update package; or
an installation sequence position of a first software update package is associated with a priority corresponding to the first software update package, time information of the trip plan, and update duration corresponding to the first software update package; or
an activation sequence position of a first software update package is associated with a priority corresponding to the first software update package, time information of the trip plan, and update duration corresponding to the first software update package; or
an installation sequence position of first hardware is associated with a priority corresponding to the first hardware and time information of the trip plan; and
the first software update package is included in the at least one software update package, and the first hardware is included in the at least one piece of hardware.

In a possible implementation, the receiving unit is further configured to:
receive information associated with a first moment, where the first moment is a moment at which the vehicle is recommended to start the trip plan, the first moment is a moment not earlier than a second moment, and the second moment is an effective moment of a second software update package or second hardware. The second software update package is included in the at least one software update package, and the second hardware is included in the at least one piece of hardware. In this way, it can be ensured that the vehicle departs after the second software update package or the second hardware takes effect, so that software corresponding to the second software update package and/or the second hardware are/is used in the trip. This helps improve trip experience of the user.

In another possible implementation, a priority of the second software update package is higher than or equal to a first priority; and/or a priority of the second hardware is higher than or equal to a second priority.

In a possible implementation, the receiving unit is further configured to:
receive a second update recommendation scheme, where the second update recommendation scheme is associated with feedback data, and the feedback data indicates at least a status of the vehicle and/or a status of a passenger in the vehicle.

In a possible implementation, the feedback data includes one or more of the following data:
sensing information of the vehicle, traveling data of the vehicle, or use information of target software.

The sensing information of the vehicle includes one or more of sound information, image information, and video information in the vehicle.

The traveling data of the vehicle includes one or more of a quantity of abnormal driving operations, an occurrence frequency of an abnormal driving operation, and energy consumption, the abnormal driving operation includes one or more of emergency braking and emergency steering, and the energy consumption includes one or more of fuel consumption and power consumption.

The target software corresponds to a target software update package, the target software update package is included in the software update package corresponding to the update information, the target software update package is an installed and/or activated software update package, and the use information of the target software includes one or more of implementation time, an implementation process, and an implementation result of each piece of software in the target software.

In a possible implementation, the trip element includes information indicating passenger health, the update information includes information about a third software update package, the third software update package is included in the at least one software update package, and the third software update package is at least used for life and health monitoring.

In a possible implementation, the trip element includes a trip element indicating that the vehicle is driven by a single person, the update information includes information about a fourth software update package, the fourth software update package is included in the at least one software update package, and the fourth software update package is at least used for driver status detection and/or voice communication.

In a possible implementation, the trip element includes a trip element indicating a travel route, the update information includes information about a fifth software update package, the fifth software update package is included in the at least one software update package, and the fifth software update package is at least used to implement assisted driving corresponding to the travel route.

In a possible implementation, the trip element includes a trip element indicating a passenger hobby, the update information includes information about a sixth software update package, the sixth software update package is included in the at least one software update package, and the sixth software update package is associated with the passenger hobby.

In a possible implementation, the update information includes information about a seventh software update package, the seventh software update package is included in the at least one software update package, a function corresponding to the seventh software update package is implemented based on a first hardware set of the vehicle, and the first hardware set includes target hardware that is supported by the vehicle and that is not configured.

In a possible implementation, the receiving unit is further configured to:
receive first information, where the first information indicates use end time of the target software, the use end time is associated with the time information of the trip plan, the target software corresponds to the target software update package, the target software update package is included in the software update package corresponding to the update information, and the target software update package is an installed and/or activated software update package.

In a possible implementation, the trip plan of the vehicle is associated with data from one or more of user equipment, the vehicle, and a device associated with the vehicle.

According to a fifth aspect, an embodiment of this application provides an update system. The system includes the update apparatus described in any implementation of the third aspect and the update apparatus described in any implementation of the fourth aspect.

According to a sixth aspect, an embodiment of this application provides an update apparatus, including a processor and a communication interface. The communication interface is configured to receive and/or send data, and/or the communication interface is configured to provide input and/or output for the processor, and the processor is configured to invoke computer instructions, to implement the method described in any implementation of the first aspect and/or implement the method described in any implementation of the second aspect.

According to a seventh aspect, this application provides an update system. The system includes a server and a vehicle.

The server is configured to implement the method described in any implementation of the first aspect, and the vehicle is configured to implement the method described in any implementation of the second aspect.

According to an eighth aspect, this application provides a chip. The chip may include a processor and an interface. The processor is configured to read instructions through the interface, to implement the method described in any implementation of the first aspect and/or implement the method described in any implementation of the second aspect.

According to a ninth aspect, an embodiment of this application provides a computer-readable storage medium. The computer-readable storage medium stores a computer program, and the computer program is used to implement the method described in any implementation of the first aspect and/or implement the method described in any implementation of the second aspect.

According to a tenth aspect, this application provides a computer program product. When the computer program product runs on a computer, the computer is configured to implement the method described in any implementation of the first aspect and/or implement the method described in any implementation of the second aspect.

For beneficial effects of some implementations of the technical solutions provided in the second to tenth aspects of this application, refer to beneficial effects of the technical solution in the first aspect. Details are not described herein again.

### BRIEF DESCRIPTION OF DRAWINGS

The following briefly describes accompanying drawings used in descriptions of embodiments.
FIG. 1 is a diagram of an architecture of an update system according to an embodiment of this application;
FIG. 2 is a schematic flowchart of an update method according to an embodiment of this application;
FIG. 3 is a diagram of a trip plan according to an embodiment of this application;
FIG. 4a is a diagram of information about a software update package 1 according to an embodiment of this application;
FIG. 4b is a diagram of information about a software update package 2 according to an embodiment of this application;
FIG. 4c is a diagram of information about a software update package 3 according to an embodiment of this application;
FIG. 4d is a diagram of information about a software update package 4 according to an embodiment of this application;
FIG. 4e is a diagram of information about a software update package 5 according to an embodiment of this application;
FIG. 4f is a diagram of information about a software update package 6 according to an embodiment of this application;
FIG. 4g is a diagram of information about a software update package 7 according to an embodiment of this application;
FIG. 4h is a diagram of an interface according to an embodiment of this application;
FIG. 4i is a diagram of another interface according to an embodiment of this application;
FIG. 4j is a diagram of another interface according to an embodiment of this application;
FIG. 4k is a diagram of another interface according to an embodiment of this application;
FIG. 5 is a diagram of an update method according to an embodiment of this application;
FIG. 6 is a diagram of another update method according to an embodiment of this application;
FIG. 7a is a schematic flowchart of another update method according to an embodiment of this application;
FIG. 7b is a diagram of an update interface of a software update package according to an embodiment of this application;
FIG. 8a is a schematic flowchart of another update method according to an embodiment of this application;
FIG. 8b is a diagram of an OTA service system according to an embodiment of this application;
FIG. 9 is a diagram of a structure of an update apparatus according to an embodiment of this application;
FIG. 10 is a diagram of a structure of another update apparatus according to an embodiment of this application; and
FIG. 11 is a diagram of a hardware structure of an update apparatus according to an embodiment of this application.

### DESCRIPTION OF EMBODIMENTS

The following describes embodiments of this application in detail with reference to the accompanying drawings.

For ease of understanding, related concepts are described for reference by using examples below. Details are as follows:

An over the air (over the air, OTA) technology is a technology for downloading data through a network, and is widely used in update of devices such as vehicles, smart appliances (such as televisions, gateways, or refrigerators), mobile terminals (such as mobile phones or tablet computers), and set-top boxes currently. In the OTA technology, automatic update is performed mainly by downloading an OTA update package (or update can be performed by copying an OTA update package to, for example, a secure digital (secure digital, SD) card). OTA update has a high speed and has small impact on data. Therefore, OTA update becomes a main manner for function update. For example, for a vehicle, a vehicle manufacturer, or referred to as an original equipment manufacturer (original equipment manufacturer, OEM), updates related hardware or software of the vehicle by using the OTA technology. This helps the manufacturer reduce recall costs, quickly respond to a requirement, and improve user experience.

In an OTA update process, an update package is usually determined by an OTA server (also referred to as an OEM cloud). An OTA update module is configured in a terminal (for example, a device like a vehicle, a television, a mobile phone, a tablet computer, or a set-top box). The OTA update module may perform information transmission with the OTA server, to update a component (which includes software and hardware, or may be an entire vehicle) on the terminal.

The foregoing example descriptions of the concepts may be applied in the following embodiments.

As there are more vehicle-related services, a vehicle user has more personalized requirements for software in a vehicle. An existing OTA update manner cannot meet a requirement of a vehicle user for in-vehicle software, hardware, and the like. In view of this, this application provides an update method and apparatus, to provide an update recommendation scheme from a perspective of a trip, so as to meet a requirement of a user for a vehicle function in different trip plans, and effectively improve user experience.

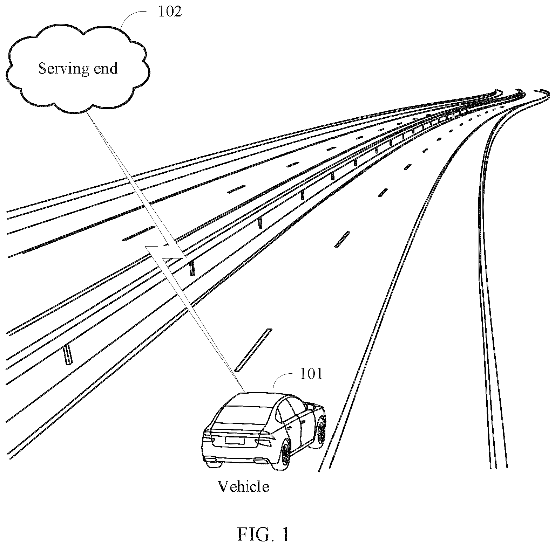

The following describes in detail a system architecture in embodiments of this application with reference to the accompanying drawings. Refer to FIG. 1. FIG. 1 is a diagram of an update system to which an embodiment of this application is applicable. The system includes a vehicle 101 and a serving end 102.

The vehicle 101 is an apparatus having a communication capability and a computing capability, and can provide a mobile travel service for a user. The vehicle 101 can provide an environment for deploying software, hardware, or a combined module of software and hardware. For example, software can be installed on the vehicle 101. For another example, the vehicle 101 has an interface for connecting to hardware, and the hardware may be connected to the vehicle 101 through the interface. For another example, the vehicle 101 has an environment for installing a hardware driver.

The serving end 102 is an apparatus having a centralized computing capability. For example, the serving end 102 may be implemented by using an apparatus like a server, a virtual machine, a cloud, a roadside apparatus, or a robot.

When the serving end 102 includes a server, a type of the server includes but is not limited to a general-purpose computer, a dedicated server computer, a blade server, or the like. A quantity of servers included in the serving end 102 is not strictly limited in this application. There may be one or more servers (for example, a server cluster). In a possible implementation, the serving end 102 may be included in an OTA server, or there is a communication connection between a server in which the serving end 102 is located and an OTA server.

The virtual machine is a software-simulated computing module that has complete hardware system functions and that runs in an entirely isolated environment. Certainly, in addition to the virtual machine, the serving end 102 may alternatively be implemented by using another computing instance, for example, a container.

The cloud is a software platform that uses an application virtualization technology, and can enable one or more pieces of software or applications to be developed and run in an independent virtualization environment. Optionally, when the serving end 102 is implemented by using the cloud, the cloud may be deployed on a public cloud, a private cloud, a hybrid cloud, or the like.

The roadside apparatus is an apparatus disposed on a roadside (or an intersection, a wayside, or the like). A road may be an outdoor road (for example, an arterial road, a side road, an elevated road, or a temporary road), or may be an indoor road (for example, a road in an indoor parking lot). The roadside apparatus can provide a service for a vehicle. It should be noted that the roadside apparatus may be an independent device, or may be integrated into another device. For example, the roadside apparatus may be integrated into a device like a smart gas station, a charging pile, a smart signal light, a street lamp, a utility pole, or a traffic sign.

Because software, hardware, or a combined module of software and hardware is usually installed on the vehicle 101, as services provided by the vehicle 101 become diversified or technologies are updated, the software, the hardware, or the combined module of software and hardware on the vehicle 101 may need to be updated during use.

In embodiments of this application, the serving end 102 can obtain a trip plan of the vehicle 101, and provide an update recommendation scheme corresponding to the trip plan for the vehicle 101. The update recommendation scheme indicates at least update information recommended to the vehicle 101. Correspondingly, the vehicle 101 may update the vehicle based on the recommended update information, so that the vehicle can provide a service that better meets a user requirement.

In the update system provided in embodiments of this application, update recommendation can be actively implemented from a perspective of a trip, and different update information is recommended based on different user trips, so that trip experience of the user can be effectively improved.

In a possible design, the update recommendation scheme provided by the serving end 102 may also be considered as a cloud service. The user may purchase the cloud service for the vehicle, so that the vehicle can obtain the update recommendation scheme provided by the serving end 102. In a possible solution, a purchase manner may include: pre-topping up first and then performing settlement based on final actual usage of a resource, or performing settlement based on time of using the update recommendation scheme or based on purchased duration of the update recommendation scheme, or the like.

The foregoing describes the architecture in embodiments of this application, and the following describes in detail the method in embodiments of this application.

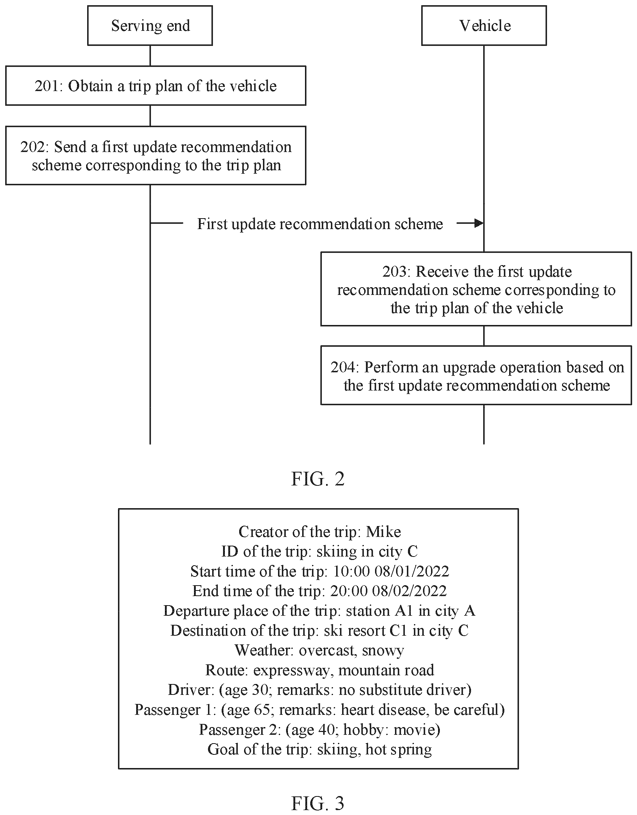

FIG. 2 is a schematic flowchart of an update method according to an embodiment of this application. Optionally, the method may be applied to the foregoing update system, for example, the update system shown in FIG. 1. The update method shown in FIG. 2 may include steps 201 to 204. It should be understood that, for ease of description, this application is described in a sequence of 201 to 204, but it is not intended to set a limitation that execution is necessarily performed in the foregoing sequence. An execution sequence, execution time, a quantity of execution times, and the like of the foregoing one or more steps are not limited in embodiments of this application. The following provides descriptions by using an example in which steps 201 and 202 of the update method are performed by a serving end (for example, the serving end 102) and steps 203 and 204 of the update method are performed by a vehicle (for example, the vehicle 101). This application is also applicable to another execution body. Steps 201 to 204 are specifically as follows:
**201: The serving end obtains a trip plan of the vehicle.**

The trip plan includes a trip element. The trip element may be understood as related information of a trip that the vehicle is about to start, and may also be referred to as a trip composition element. For example, the trip element may be one or more of start time of the trip, end time of the trip, a departure place of the trip, a destination of the trip, weather in the trip, a travel distance, driver information, passenger information, a goal of the trip, a usage purpose of the vehicle, time information corresponding to the usage purpose, and the like.

**The following describes some of the foregoing trip elements.**
**a. Start time of the trip and end time of the trip:** The start time of the trip may include a year, a month, a date, a moment in a day, and the like about a trip start.

When the start time of the trip includes a date, the start time of the trip may also be referred to as a start date of the trip. Similarly, the end time of the trip may also be referred to as an end date of time.

In embodiments of this application, time may be represented by using a moment, a timestamp (or referred to as a Unix timestamp), a timer, or the like. A manner of representing the time is not strictly limited in this application.

For example, the start time of the trip may be "07:00:00 6/14/2022". For example, the start time of the trip may be represented by using a timestamp, and the timestamp means a quantity of seconds that have elapsed since 1/1/1970. For example, a timestamp "1655161200" represents "07:00:00 6/14/2022". The timestamp may represent time by using a number (or a character string), to facilitate storage, transmission, and calculation of the time.

For example, the start time of the trip may alternatively be represented by using a timer. For example, a timer of "3600" seconds is set. When the timer reaches 0, it indicates the start time of the trip.

Similarly, the end time of the trip may also be represented in a similar representation manner. Details are not described herein again.

**b. Departure place of the trip and destination of the trip:** The departure place of the trip is a place in which the trip plan starts. Optionally, the place may be represented by using an address, a longitude and a latitude, or a map. A manner of representing the departure place of the trip is not strictly limited in this application. For example, when the departure place is represented by using an address, the departure place may be "No. XX, XX road, XX street, XX county, XX city". For another example, the departure place may be determined by selecting a point on a map. Similarly, the destination of the trip may also be determined in a similar manner. Details are not described herein again.

**c. Weather in the trip:** The weather in the trip describes an atmospheric status in the trip. The weather in the trip may include one or more of meteorological elements such as a temperature, atmospheric pressure, humidity, wind, cloud, fog, rain, flash, snow, frost, thunder, hail, haze, or the like. Further, the weather in the trip may further include weather in a plurality of time periods and a plurality of locations in the trip.

**d. Travel distance:** The travel distance may include, for example, a mileage from the departure place of the trip to the destination of the trip. For example, the travel distance may be 50 kilometers (km). Optionally, the trip element may include one or more of a travel route, a travel road condition, or the like. The travel route means a road, a place, or the like that is passed from the departure place of the trip to the destination of the trip. The travel road condition means a basic condition, a damage condition, and the like of a roadbed, a road surface, a structure, an auxiliary facility, and the like of a road in the trip. For example, the travel road condition may include one or more of an asphalt road surface, a mountain road surface, a cement road surface, and the like. For another example, the travel road condition may include one or more of an expressway, an urban road, an arterial road, a side road, and the like. In some scenarios, the travel road condition also means a congestion status (for example, including smooth, slow, or congested), a traffic status (for example, including two-way multi-lane traffic, one-way traffic, or traffic prohibited), and the like in the trip.

In a possible implementation, the trip element indicates that the vehicle is to travel through an expressway, a mountain road, or the like.

**e. Driver information and passenger information,** that is, a personnel situation in the trip: For example, one or more pieces of information such as genders, ages, hobbies, occupations, or health statuses of a driver and a passenger may be included.

In a possible implementation, the trip element includes information indicating passenger health. For example, the trip element may indicate that a passenger A is suffering from a heart disease, asthma, or the like.

In a possible implementation, the trip element includes a trip element indicating a passenger hobby. For example, the trip element indicates that a passenger B likes to listen to songs of a singer, or likes to watch movies.

In some possible manners, the driver information and the passenger information may further include a driving mode, or the driver information and/or the passenger information are/is used to obtain a driving mode. The driving mode in embodiments of this application includes unmanned driving, single-person driving, multi-person driving, or the like.

For example, the driver information indicates that there is no driver in the trip. In this case, the driving mode may be unmanned driving. For another example, the driver information indicates that there is only one driver in the trip. In this case, the driving mode may be single-person driving. For another example, the driver information indicates that there is only one driver, and the passenger information indicates that there is no passenger other than the driver. In this case, the driving mode may be single-person unaccompanied driving.

In some scenarios, the driving mode may also be considered as a trip element.

**f. Goal of the trip:** may be, for example, going on a journey, going on a business trip, pick-up, or skiing.

**g. Usage purpose of the vehicle and time information corresponding to the usage**

**purpose:** It may be understood that usage purposes of the vehicle correspond to different time periods. For example, the vehicle is used for rental from 8:00 a.m. to 6:00 p.m., and is used for unmanned delivery from 6:00 p.m. to 12:00 p.m. Certainly, the vehicle may also be used for another purpose. This is not specifically limited in this solution.

The foregoing is several example descriptions for ease of describing the trip element. In a specific implementation process, the trip plan may include more or fewer trip elements. This is not strictly limited in this application.

**For ease of understanding the trip element included in the trip plan,** **FIG. 3** **shows a possible trip element included in a trip plan.** A trip plan table shown in FIG. 3 includes the following trip elements: a creator of a trip, an ID of the trip, start time of the trip, end time of the trip, a departure place of the trip, a destination of the trip, weather, a distance, age information of a driver, age information, health information, and hobby information of a passenger, and a goal of the trip. The trip plan is described in a form of a plurality of trip elements, and the serving end can sort out information in the trip plan by using the trip elements. This helps the serving end analyze a user requirement.

**The foregoing describes the trip plan and the trip element. The following lists examples of two manners of obtaining the trip plan by the serving end.**

**Manner 1: The serving end receives the trip plan provided by another device.** The another device herein is another device other than the serving end, and includes but is not limited to user equipment, the vehicle, a device associated with the vehicle, or the like. The user equipment in embodiments of this application includes a handheld terminal device, a wearable device, a professional operation device, or the like. The handheld terminal device is, for example, a device like a mobile phone, a tablet computer, a police communication device, or an express communication device. The wearable device is, for example, a smart band, a smartwatch, or smart glasses. The professional operation device is, for example, a vehicle rental device. The device associated with the vehicle includes a device that can sense the vehicle and/or a device that exchanges data with the vehicle. For example, the device associated with the vehicle includes one or more of an OTA server, a roadside device, an intersection radar, a camera, a roadside base station, or the like.

The following uses an example in which the serving end receives the trip plan provided by the vehicle for description.

In a possible solution, an input unit (for example, a touchscreen, a button, or voice input) is disposed in the vehicle, and a user may enter a trip plan by using the input unit. The trip plan may include a plurality of trip elements.

Further, the vehicle may process the information entered by the user to obtain the trip plan including the plurality of trip elements. For example, a user A enters a voice to the vehicle: "I want to go to the XX railway station to pick up a passenger B at 5:00 p.m. tomorrow", and the vehicle may process the voice entered by the user, to obtain a trip plan including trip elements such as start time of a trip (that is, 5:00 p.m. tomorrow), a trip route (that is, going to the XX railway station), a driver (that is, the user A), and a passenger (that is, the user B). In addition, information about the user A and the user B may be recorded in the vehicle in advance, so that more trip elements are included in the trip plan. In a possible solution, the vehicle may synchronize with another device of the user, and obtain the trip plan based on synchronized information. For example, a vehicle of the user A may synchronize data with a smartphone of the user A, and the user enters, in the mobile phone, a trip plan in which the vehicle needs to be used. In this case, the vehicle may obtain the trip plan synchronously.

The following uses an example in which the serving end receives the trip plan provided by the user equipment for description. A user enters, in a mobile phone, a trip plan in which the vehicle needs to be used, and the mobile phone may submit the trip plan to the serving end. Correspondingly, the serving end receives the trip plan submitted by the mobile phone. Embodiments of this application may be further applied to a vehicle rental reservation scenario. A vehicle rental application is installed in a mobile phone of a user, and a trip plan may be filled by using the vehicle rental application. The trip plan includes vehicle rental time, driver information, passenger information, or the like.

**Manner 2: The serving end obtains second information, and processes the second information to obtain the trip plan.** The second information is information that is related to the trip plan and that is collected by the serving end. A processing process may include processes such as semantic analysis or keyword matching.

For example, the second information may be voice data of "I want to go to the XX railway station to pick up a passenger B at 5:00 p.m. tomorrow" entered by the user, and a trip plan including trip elements such as start time of a trip, a trip route, driver information, and passenger information is obtained by performing semantic analysis on the second information.

For another example, the serving end performs associated word matching on the second information and a trip element and/or a value of a trip element, to obtain a trip plan including a plurality of trip elements. For example, an associated word of "departure place of the trip" may include "start point of the trip", "trip start point", or the like; and an associated word of "XX station" may include "XX railway station", "XX station", "XX high-speed railway station", or the like. Management (including generation, maintenance, and the like) of an associated word dictionary and a specific matching manner are not strictly limited in embodiments of this application.

Certainly, the serving end may alternatively obtain the trip plan by using another means, and the foregoing two listed manners are merely examples. A plurality of manners of obtaining a trip plan may further be combined, and a combination case is not described herein.

**202: The serving end sends a first update recommendation scheme corresponding to the trip plan.**

The first update recommendation scheme indicates at least update information recommended to the vehicle. The indication may be direct inclusion or indirect association. The direct inclusion means that the update recommendation scheme includes the update information. The indirect association means that the update recommendation scheme does not directly include the update information, but includes indication information (for example, an identifier, a download address, or a ciphertext) associated with the update information. Another device can obtain the update information by using the indication information.

The update information includes at least one of information about at least one software update package, information for indicating to download the at least one software update package, information for indicating to activate the at least one software update package, information about at least one piece of hardware, or the like. The at least one software update package is a software update package recommended to be installed on the vehicle, and the at least one piece of hardware is hardware recommended to be installed on the vehicle.

**For ease of understanding, the following lists several possible designs of content included in the update information.**

**Design 1:** The update information includes the information about the at least one software update package. The information about the software update package may include one or more of an identity ID of the software update package, a number, the software update package itself (that is, the software update package), download permission, a download process, an image file, a software name, a software description, a software type, software update time, a software applicable condition (for example, an applicable vehicle model, an applicable route, and a hardware requirement), and the like. For example, when the information about the software update package includes the image file of the software update package, the information about the at least one software update package is an image file of the at least one software update package, and the vehicle may install the at least one software update package by using the image file, that is, may use software corresponding to the at least one software update package.

**Design 2:** The update information includes the information for indicating to download the at least one software update package. For example, the update information includes a download address, and the vehicle may download the software update package by using the download address, and may use software corresponding to the software update package after downloading and installation.

It should be noted that the "information about at least one software update package" may describe an attribute of software. The "information for indicating to download at least one software update package" may be considered as information with a goal. In some scenarios, the information about the software update package and the information for indicating to download the software update package may include some same information. Information content included in the information about the software update package and the information for indicating to download the software update package is not strictly limited in embodiments of this application. For example, a download address of software may be considered as information about the software, or may be considered as information for indicating to download the software.

**Design 3:** The update information includes the information for indicating to activate the at least one software update package. For example, the update information includes one or more of permission, a key, a license, or the like of at least one piece of software. In this case, the software usually has been installed in the vehicle, but the software is not activated. The update information may be used to activate the software corresponding to the software update package.

**Design 4:** The update information includes the information about the at least one piece of hardware. For example, the at least one piece of hardware may be an ID, a number, a specification model, or the like of the hardware. For example, the information about the at least one piece of hardware is the specification model of the at least one piece of hardware. The vehicle may obtain the at least one piece of hardware based on the specification model and install the at least one piece of hardware, that is, may use the at least one piece of hardware.

For example, this application relates to a plurality of software update packages, for example, a first software update package, a second software update package, a third software update package, a fourth software update package, a fifth software update package, a sixth software update package, and a seventh software update package. For information about the plurality of software update packages, refer to the foregoing described information about the software update package. Details are not described subsequently.

**The update information is described above. The following describes an example of a manner in which the serving end obtains the first update recommendation scheme.**

The update information in embodiments of this application is included in the update recommendation scheme, and the update recommendation scheme corresponds to the trip element in the trip plan. In some designs, the serving end may obtain the corresponding first update recommendation scheme based on the trip plan.

For example, that the update recommendation scheme corresponds to the trip plan includes that the update information corresponds to the trip element in the trip plan. For ease of understanding, the following lists several possible examples of the update information and the trip element.

Example 1: The trip element includes information indicating passenger health. Correspondingly, the update information of the update recommendation scheme includes information about a software update package used for life and health monitoring. For ease of differentiation, the software update package used for life and health monitoring is referred to as a third software update package below. The third software update package may include software having a life and health detection function, or the third software update package may be used to implement a life and health detection function.

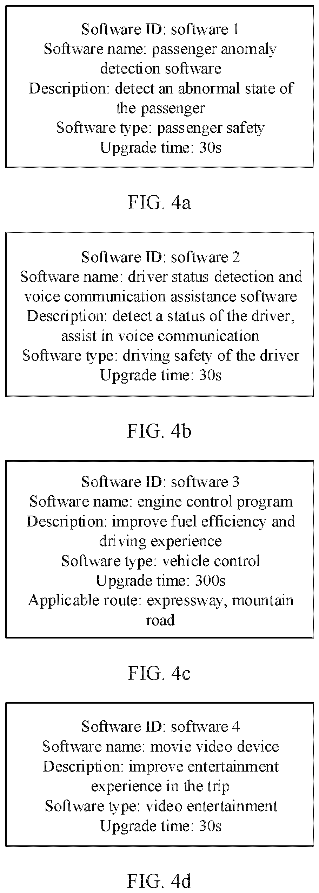

FIG. 4a shows information about a possible third software update package. As shown in FIG. 4a, an ID of the third software update package is "software 1" (which is only an example), and a software name is "passenger anomaly detection software". Optionally, the information about the third software update package may further include a software type, a software description, update time, and the like. It can be learned that the third software update package is used to detect an abnormal status of a passenger, to ensure safety of the passenger.

In some scenarios, if the trip element indicates that a passenger has a heart disease, the serving end may recommend the foregoing passenger anomaly detection software to the vehicle. Correspondingly, after the passenger anomaly detection software is installed on the vehicle, a life and health detection function of the vehicle can be improved, so that the passenger receives more attention in the trip. Even, the passenger anomaly detection software can give an early warning when the passenger is in danger, to provide more reaction time for an accompanying passenger.

It should be noted that, in embodiments of this application, an example in which the trip element includes the information indicating passenger health is used for description. The trip element may further include information indicating driver health, and the like. This is not strictly limited in this solution.

Example 2: The trip element includes a trip element indicating that the vehicle is driven by a single person. In this case, the update information may include information about a fourth software update package. The fourth software update package is related software recommended to the vehicle for the single-person driving mode. The fourth software update package is at least used for one or more of driver status detection, voice communication, or the like. For example, a function of software corresponding to the fourth software update package includes one or more of driver status detection, voice communication, or the like. For another example, the fourth software update package corresponds to implementation of one or more of a driver status detection function or a voice communication function.

FIG. 4b shows information about a possible fourth software update package. As shown in FIG. 4b, an ID of the fourth software update package is "software 2" (which is only an example), and a software name is "driver status detection and voice communication assistance software". Optionally, the information about the fourth software update package may further include a software type, a software description, update time, and the like. It can be learned that the fourth software update package is used for one or more of driver status detection, voice communication, or the like, to ensure driving safety.

**In** some scenarios, the serving end recommends the fourth software update package based on information such as single-person driving or a monotonous route (for example, a long straight-line route like an expressway) included in the trip plan.

**In** a single-person driving state, the driver may be tired or distracted. This may cause a safety risk in the trip. However, in the foregoing implementation shown in the example 2, the update information may be used to recommend to install applicable software in the vehicle in a single-person driving scenario. The software helps improve a driving status of the driver and ensure personal and property safety of the driver.

Example 3: The trip element includes a trip element indicating a travel route. In this case, the update information may include information about related software of a vehicle control type. In this way, a control function of the vehicle can be updated based on the travel route, thereby improving driving experience of the user.

FIG. 4c shows information about a possible software update package of a vehicle control type. As shown in FIG. 4c, an ID of the software update package is "software 3" (which is only an example), and a software name is "engine control program". Optionally, the information about the software update package may further include a software type, a software description, update time, an applicable route, and the like. It can be learned that software corresponding to the software update package shown in FIG. 4c is applicable to routes such as an expressway and a mountain road. In some scenarios, the serving end recommends the engine control program based on information such as a route like an expressway or a mountain road included in the trip plan. In this way, driving experience of the user can be improved, and fuel efficiency can be improved.

Example 4: The trip element includes a trip element indicating a passenger hobby. In this case, the update information includes information about a sixth software update package, and the sixth software update package is associated with the passenger hobby.

FIG. 4d shows information about a possible sixth software update package. As shown in FIG. 4d, an ID of the sixth software update package is "software 4" (which is only an example), and a software name is "movie video device". Optionally, the information about the sixth software update package may further include a software type, a software description, update time, and the like. It can be learned that the sixth software update package shown in FIG. 4d belongs to a video entertainment type, and is used to improve entertainment experience of the trip. The serving end may recommend the movie video device based on information such as a passenger hobby like movies included in the trip plan.

In conclusion, the serving end recommends the software update package associated with the passenger hobby to the vehicle, to improve trip entertainment experience of the passenger.

It should be noted that, in embodiments of this application, an example in which the trip element includes a trip element indicating a passenger hobby is used for description. The trip element may further include a trip element indicating a driver hobby, and the like. This is not strictly limited in this solution.

**The foregoing describes how the serving end obtains the first update recommendation scheme based on the trip plan. The following describes another implementation in which the serving end obtains the first update recommendation scheme.**

In a possible solution, the serving end determines the first update recommendation scheme based on the trip plan and information about the vehicle.

The information about the vehicle includes one or more of a vehicle model, a hardware configuration, a software configuration, resource information, or the like. The vehicle model may be, for example, a small vehicle, a middle-sized vehicle, an advanced vehicle, a three-compartment vehicle, or a sport utility vehicle (sport utility vehicle, SUV). The hardware configuration may be, for example, one or more of an engine, a control system, a gearbox, a reversing sensor, a sunproof, an air conditioner, or a vehicle speaker. The software configuration may be, for example, an operating system, an auto hold function, or an autonomous driving function in the vehicle.

The resource information includes an attribute of a resource, usage of the resource, configuration information of the resource, or the like. The resource mentioned herein includes but is not limited to a computing resource, a storage resource, a network resource, and the like. For example, the resource information includes the usage of the resource. The resource information may specifically indicate a current remaining resource, a used resource, or the like. For example, an in-vehicle chip may be considered as a resource. When the vehicle includes the in-vehicle chip, the resource information may include computing power of the in-vehicle chip, remaining computing power of the in-vehicle chip, or the like. For example, memory in the vehicle may be considered as a resource. When the vehicle includes specific memory, the resource information may include a remaining capacity of the memory or the like.

**In** the foregoing solution, the serving end determines the first update recommendation scheme based on the trip element in the trip plan and the information about the vehicle. In this way, it can be ensured that the update information is applicable to the vehicle and the trip plan, thereby further improving trip experience of the user.

For example, the trip plan includes a trip element indicating a travel route, and the information about the vehicle indicates that a vehicle model of the vehicle is a specific vehicle model. In this case, the serving end may determine, based on the trip element indicating the travel route and the information about the vehicle, the update information that is applicable to the travel route and that is supported by the vehicle.

**In** a possible solution, the update information includes information about a fifth software update package, the fifth software update package is used to implement assisted driving, the assisted driving corresponds to the travel route, and the fifth software update package is applicable to the vehicle.

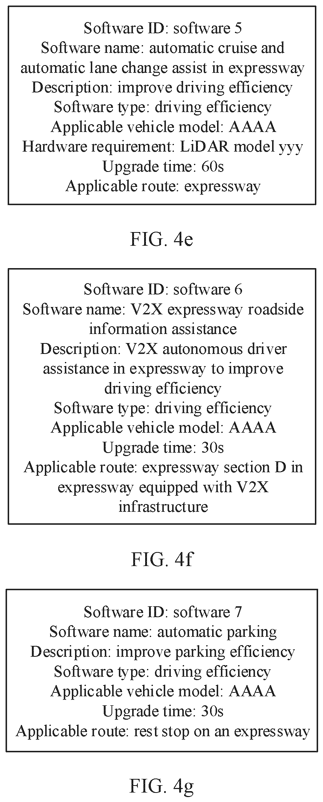

FIG. 4e shows information about a possible fifth software update package. As shown in FIG. 4e, an ID of the fifth software update package is "software 5" (which is only an example), and a software name is "automatic cruise and lane change assist in expressway". Optionally, the information about the fifth software update package may further include a software type, a software description, an applicable vehicle model, a hardware requirement, update time, an applicable route, and the like. In a possible solution, when the vehicle model of the vehicle is "AAAA" and the trip plan includes a travel route on an "expressway", the serving end may recommend the software shown in FIG. 4e to the vehicle. In this case, the update recommendation scheme provided by the serving end may include the information about the fifth software update package shown in FIG. 4e. Based on this, expressway automatic cruise and automatic lane change assist software may be configured in the vehicle, so that the vehicle can provide a corresponding driver assistance function in a traveling process, to improve driving efficiency of the driver.

Optionally, the information about the vehicle may also be included in the trip plan. For example, the trip element includes vehicle model information, and the vehicle model information may be used to determine software supported by the vehicle. For example, the trip element may indicate whether the vehicle supports the expressway automatic cruise and automatic lane change assist software.

When the update recommendation scheme is provided based on the trip plan, recommendation may be performed with reference to the information about the vehicle. In this way, a case in which the update information is not adapted on a vehicle side is reduced, a success rate of vehicle update is improved, and user experience is improved.

It should be noted that when the serving end provides the update recommendation scheme for the vehicle, the update information indicated by the update recommendation scheme may be supported by a current hardware condition, or may be temporarily not supported by a current hardware condition, or may be supported by some hardware conditions in a plurality of hardware conditions, or the like. The hardware conditions are in an ongoing update process, and/or the vehicle may travel through routes with different hardware conditions. Therefore, if software (for example, referred to as software A) needs to be provided for the vehicle, but a hardware condition does not support the software A temporarily (or some hardware conditions do not support the software A), the update recommendation scheme may also include information about the software A, so that the software A can be used in a timely manner after the hardware condition is updated (or in some hardware conditions that support the software A), thereby improving user experience.

The hardware condition herein includes a hardware condition of the vehicle, or may be a hardware condition of a road on which the vehicle travels, or may include a network condition required for vehicle communication, or the like. For ease of description, a hardware condition that can be updated or a hardware condition that can be selected is referred to as an extensible hardware condition below, and several implementations of update information applied to the extensible hardware condition are listed.

**Implementation 1:** The update information includes information about a seventh software update package. A function corresponding to the seventh software update package is implemented based on a first hardware set of the vehicle, and the first hardware set includes one or more pieces of target hardware that are supported by the vehicle and that are not configured.

For example, currently, the vehicle is not installed with a sensor like a lidar (light detection and ranging, LiDAR, or referred to as a light detection and ranging apparatus) or a camera, and does not have an automatic cruise assist function and an automatic lane change assist function on an expressway. However, in the vehicle of such a vehicle model, a hardware plug-in interface of a sensor like a LiDAR or a camera has been configured, so that quick installation can be implemented. In this case, based on the trip plan and the information about the vehicle (including hardware interface information in the vehicle and the like), when the route relates to an expressway, the serving end may recommend the expressway automatic cruise and automatic lane change assist software shown in FIG. 4e.

In addition, the serving end may further recommend information about a hardware device applicable to the software, or recommend information about a hardware device applicable to the interface, for example, recommend installation of hardware: LiDAR model yyy (which may be understood as one piece of target hardware that is supported by the vehicle and that is not configured). In this way, personalized requirements of some users for vehicle functions are met, and a success rate of vehicle function update is improved, so that user experience is improved. Further, optionally, the information about the hardware device recommended by the serving end may be included in the update recommendation scheme. For details, refer to the description in the foregoing design 4. Details are not described herein again.

Optionally, the serving end may further recommend information related to hardware installation, for example, time and a place for installing the hardware.

Implementation 2: In the trip plan, the travel route through which the trip passes includes a plurality of optional routes, and a vehicle-to-everything (vehicle-to-everything, V2X) facility is disposed in some routes (or may be understood as that the some routes have a capability of a hardware facility or a hardware condition supporting V2X communication, or may be understood as an example of an available hardware condition). In this case, although the vehicle does not necessarily pass through a path with a V2X facility, software that is available in a condition with a V2X facility may still be recommended to the vehicle, to improve travel safety and comfort.

For example, the serving end recommends "V2X expressway roadside information assistance software" to the vehicle based on the trip plan and the information about the vehicle. Information about the V2X expressway roadside information assistance software is shown in FIG. 4f. An ID of the V2X expressway roadside information assistance software is "software 6" (which is only an example), and a software name is "V2X expressway roadside information assistance". Optionally, the information about the seventh software update package may further include a software type, a software description, an applicable vehicle model, update time, an applicable route, and the like. If the update recommendation scheme includes the information about the software shown in FIG. 4f, the vehicle may install the V2X expressway roadside information assistance software. When the vehicle passes through an expressway section of an expressway D equipped with a V2X infrastructure, the V2X expressway roadside information assistance software may be used, to improve driving efficiency of the vehicle, and improve travel safety and comfort.

Further, the update recommendation scheme may further include recommendation or priority sequence position for a travel path. In other words, the serving end may recommend, to the vehicle, a travel route of an expressway having a V2X facility, or set a priority of a travel route of an expressway having a V2X facility to a high priority.

**Implementation 3:** The update information may include information about automatic parking software and/or information for indicating to download the automatic parking software. FIG. 4g is a diagram of a possible software update package. As shown in FIG. 4g, an ID of the automatic parking software is "software 7" (which is only an example), and a software name is "automatic parking". Optionally, the information about the software update package may further include a software type, a software description, an applicable vehicle model, update time, an applicable route, and the like. The serving end recommends the software shown in FIG. 4g to the vehicle. Correspondingly, after the software is installed on the vehicle, in a place (for example, a rest stop on an expressway shown in FIG. 4g) with an automatic parking collaborative facility, the software shown in FIG. 4g can be used to park the vehicle, thereby improving parking efficiency. Herein, the place with the automatic parking collaborative facility may be understood as a place with a hardware facility or a hardware condition that supports automatic parking, or may be understood as an example of an available hardware condition.

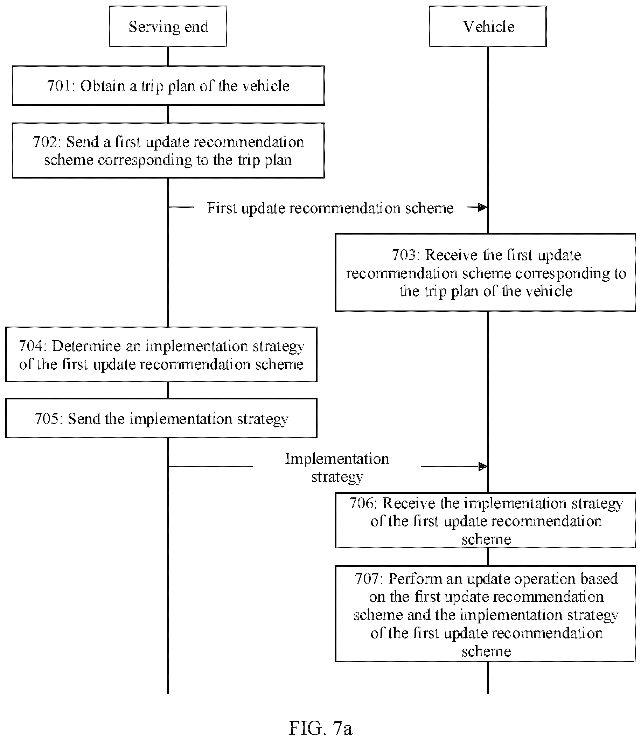

The foregoing describes a case that the first update recommendation scheme includes the update information recommended to the vehicle. In a specific implementation process, the first update recommendation scheme further includes other information. For example, the first update recommendation scheme further includes an implementation strategy. For a description of this part, refer to the embodiment shown in FIG. 7a.

203: The vehicle receives the first update recommendation scheme corresponding to the trip plan of the vehicle.

It should be understood that a manner in which the serving end sends the update recommendation may be direct sending, or may be indirect sending to the vehicle (through another device). The direct sending manner may be understood as that the serving end sends the first update recommendation scheme to the vehicle, and correspondingly, the vehicle receives the first update recommendation scheme.

**In** the indirect sending manner, the serving end may send the first update recommendation scheme to the vehicle through another device. For example, the serving end sends the first update recommendation scheme to the vehicle through forwarding of one or more of a content delivery network (content delivery network, CDN), an OEM server, an OTA cloud, or the like. Correspondingly, the vehicle receives the first update recommendation scheme through one or more of the CDN network, the OEM server, the OTA cloud, or the like.

For example, the serving end provides the first update recommendation scheme to the OTA cloud by using an application programming interface (application programming interface, API), so that the OTA cloud forwards the first update recommendation scheme to the vehicle.

The another device may alternatively be a roadside device, an intersection radar, a base station that communicates with the vehicle, or the like. For example, the serving end sends the first update recommendation scheme to the vehicle through forwarding of one or more of the roadside device, the intersection radar, the base station that communicates with the vehicle, or the like. Correspondingly, the vehicle receives the first update recommendation scheme through forwarding of one or more of the roadside device, the intersection radar, the base station that communicates with the vehicle, or the like.

204: The vehicle performs an update operation based on the first update recommendation scheme.

The vehicle performs software installation, software activation, hardware installation, or the like based on the first update recommendation scheme, to improve user experience in the trip.

For example, if the update information indicates to download at least one software update package, a corresponding update operation may be downloading and installing the at least one software update package, so that the user uses software corresponding to the at least one software update package. For another example, if the update information indicates to activate at least one software update package in the vehicle, a corresponding update operation may be activating the at least one software update package, so that the user uses software corresponding to the at least one software update package. For another example, if the update information indicates at least one piece of hardware, a corresponding update operation may be installing the at least one piece of hardware, so that the user uses the at least one piece of hardware.

Optionally, the vehicle may prompt, based on the received update information, the user to perform an operation like selection or confirmation. An update operation is performed based on update information selected or confirmed by the user.

It should be noted that the update mentioned in this application may include one or more of software update, hardware update, and overall function update of the vehicle. For example, if specific software is not installed in the vehicle, and the update information indicates to install the software, this scenario may also be considered as update of the vehicle. For another example, if there is no specific hardware in the vehicle, prompting to install the hardware to facilitate use of specific software may also be considered as update of the vehicle. For another example, software A is installed in the vehicle, and a function implemented by the software A is a function A. The update information indicates to enhance the function implemented by the software A. For example, the function of the software A is changed from supporting the function A to supporting a function B or supporting functions A and B. This scenario may also be considered as update of the vehicle. The following lists several possible examples in which the vehicle performs the update operation based on the first update recommendation scheme.

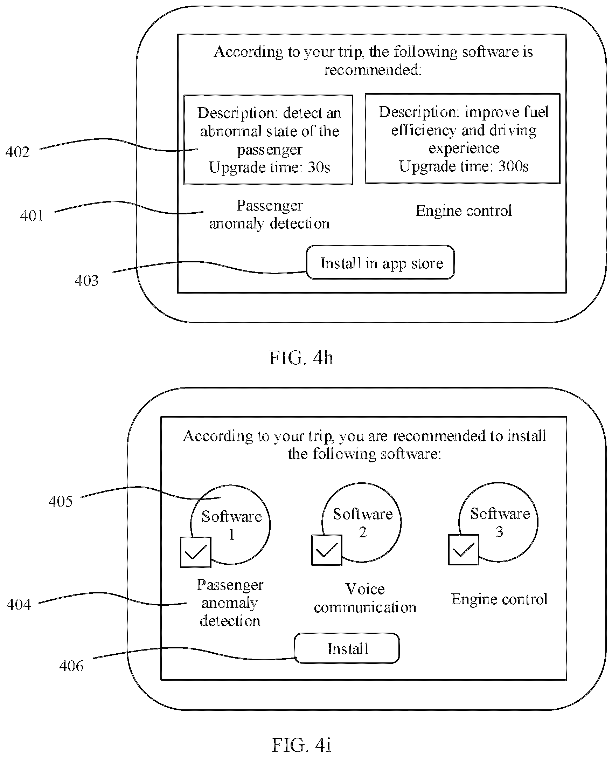

Example 1: The update information includes information about one or more software update packages. FIG. 4h is a diagram of an interface of update information. For example, the interface may be displayed on a central control display of the vehicle (or another user interface, which is merely an example herein). The interface may include information about at least one software update package. As shown in FIG. 4h, the update information received by the vehicle includes a name 401 of a passenger anomaly detection software update package, a description of the software update package, and update time 402. The description of the passenger anomaly detection software update package is detecting an abnormal status of a passenger. The update time of the passenger anomaly detection software update package is 30s. The update information received by the vehicle further includes a name of an engine control software update package, a description of the software update package, and update time.

Optionally, after presenting the information about the one or more software update packages to the user, the vehicle may receive information indicating that the user confirms to update one or more pieces of software. For example, if the user wants to install the recommended software, the user may tap the "Install in app store" option 403, to jump to an app store interface to install the software. In this example, only the interface is used as an example for description, and the interface may further include other information and the like. This is not strictly limited in this solution.

Example 2: The update information includes information for indicating to download one or more software update packages. FIG. 4i is a diagram of an interface of update information. The interface may include information for recommending to download and install at least one software update package. As shown in FIG. 4i, the update information received by the vehicle includes a name 404 of a passenger anomaly detection software update package and an icon 405 of the passenger anomaly detection software update package. The update information further includes a name of a voice communication software update package, an icon of the voice communication software update package, and a name and an icon of an engine control software update package.

Optionally, after the user confirms the indication for downloading the update package, downloading of the update package may be triggered. For example, the interface shown in FIG. 4i further includes an "Install" option 406. For example, if the user wants to install the recommended software, the user may tap the "Install" option 406 to install the software. Optionally, the vehicle may further display a download and installation process of the software, so that the user can learn of an update progress.

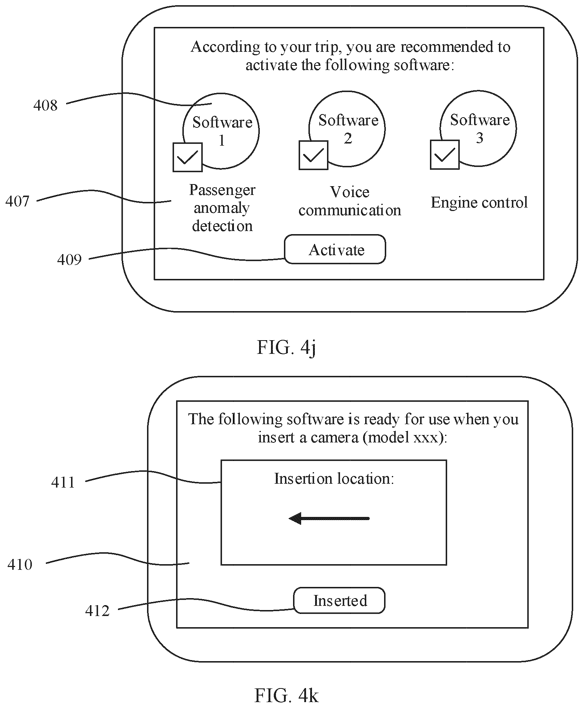

Example 3: The update information includes information for indicating to activate one or more software update packages in the vehicle. FIG. 4j is a diagram of an interface of update information. The interface may include information for recommending to activate at least one software update package. As shown in FIG. 4j, the update information received by the vehicle includes a name 407 of a passenger anomaly detection software update package and an icon 408 of the passenger anomaly detection software update package. The update information further includes a name of a voice communication software update package, an icon of the voice communication software update package, and a name and an icon of an engine control software update package. The interface further includes an "Activate" option 409. The recommended software is usually installed in the vehicle, but the software is not activated. If the user wants to activate the recommended software, the user may perform a software activation operation by tapping the "Activate" option 409. Optionally, the central control display of the vehicle may further display an activation process of the software.

Example 4: The update information includes information about one or more pieces of hardware. The information about the hardware may be presented by using an interface, to remind the user to assemble the hardware or update a function of the hardware.

In a possible design, the vehicle may trigger one or more of a voice, light, electricity, a vibration prompt, a display, or the like to remind the user to install the hardware. For example, the vehicle may include an output control module like a display processor, an audio processor, or a vibration processor (or the vehicle is connected to the output control module), and the vehicle may output a reminder signal to the user by using the module. Using the display processor as an example, the reminder signal may trigger the display processor to present the reminder signal, prompt information, or the like. For example, a head up display (head up display, HUD) in the vehicle may output a reminder signal, where the reminder signal is used to remind the user to connect related hardware and the like. For another example, the foregoing reminder signal may be presented by using a vibration controller in a cockpit domain of the vehicle, and a user in the cockpit may feel a vibration prompt.

FIG. 4k is a diagram of an interface of update information. The interface 410 may be displayed on a central control display of the vehicle. The interface 410 displays the update information received by the vehicle, and the update information includes a camera recommended to be inserted.

Optionally, the update information further includes a model of the inserted camera, and the like.

Further, optionally, the interface further includes an insertion location reminder 411, to indicate the user to insert the camera into a location that is in the vehicle and that is indicated by the interface. In some designs, the interface 410 further displays an inserted reminder 412, so that the user learns of a hardware installation process.

The foregoing describes a case that after receiving the update information, the vehicle prompts the user to perform an operation like selection or confirmation. The following describes an update operation in a vehicle rental scenario or an unmanned driving scenario.

In the vehicle rental scenario or the unmanned driving scenario, after receiving update information, the vehicle may output prompt information to a terminal device (for example, a mobile phone or a computer) of a vehicle owner. The prompt information is used to prompt the vehicle owner to perform an operation on the terminal device to select a corresponding software update package in the update information for the vehicle for installation, activation, or the like, or indicate that related hardware needs to be connected. In the vehicle rental scenario, the vehicle owner may choose to send the received update information to a mobile phone, a computer, or the like of a vehicle tenant, so that the vehicle tenant performs a corresponding operation to ensure that an update operation can be completed before the vehicle is used. For example, the prompt information may be sent one day before the trip or on the day when the trip starts. In this way, the corresponding software and hardware can be installed in advance, so that the trip is not delayed.

In the embodiment shown in FIG. 2, the serving end can actively provide an update recommendation scheme from a perspective of a trip. Because the update recommendation scheme corresponds to a trip plan of a vehicle, different update recommendation schemes can be recommended based on different user trips, to meet a requirement of a user for a vehicle function in different trip plans, so that use experience of a passenger can be effectively improved.

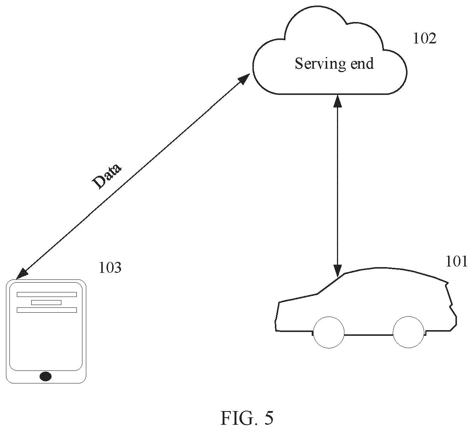

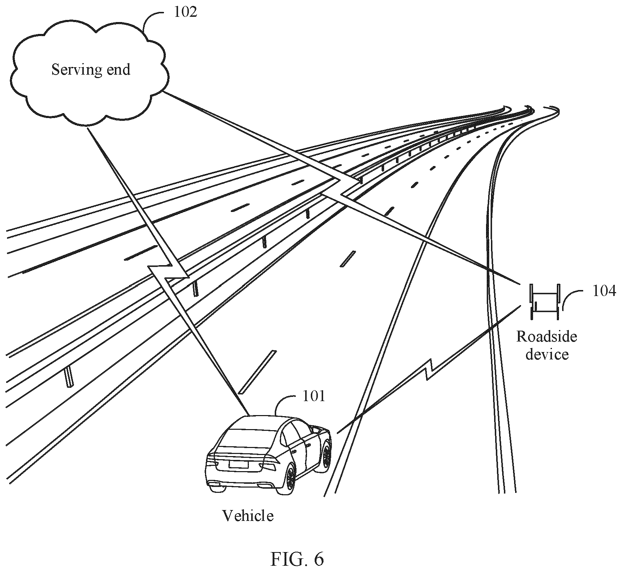

The foregoing method embodiment shown in FIG. 2 includes many possible implementation solutions. The following separately illustrates some of the implementation solutions with reference to FIG. 5 and FIG. 6. It should be noted that, for related concepts, operations, or logical relationships that are not explained in FIG. 5 and FIG. 6, refer to corresponding descriptions in the embodiment shown in FIG. 2. Therefore, details are not described again.

Refer to FIG. 5. FIG. 5 is a diagram of another update method according to an embodiment of this application. It should be noted that a trip plan in this embodiment is obtained from user equipment.

The serving end 102 (for example, a server) receives data from the user equipment 103, where the data may be, for example, obtained based on information entered by a user. Then, the server obtains the trip plan based on the data.

The user equipment is a device that can interact with the user. The user equipment in embodiments of this application includes a handheld terminal, a wearable device, a recreation device, or the like. For related descriptions, refer to the foregoing descriptions. The user equipment may establish a communication connection with a vehicle, or may not establish a communication connection with a vehicle.

The server may receive the data from the user equipment 103 in the following manner.

For example, the server interacts with a vehicle rental service application, and a vehicle tenant may enter information on the vehicle rental service application, so that the server may obtain related trip information. For example, if a user rents a vehicle by using an application (application, APP) on a mobile phone, the user needs to enter related vehicle rental information, for example, vehicle rental start time, vehicle rental end time, a vehicle rental purpose, and user information. Then, the server obtains the information from the app on the mobile phone.

Alternatively, the server interacts with a map application. For example, a trip planner may query related data on the map application, and the map application may send information corresponding to the related data to an application or a server that has an information subscription service. For example, the trip planner queries a path from one place to another place on the map application, and the map application may send the information to another application or a server that has an information subscription service.

The server may alternatively obtain trip-related data from an application in a unified manner. This is not specifically limited in this solution.

The server sends, based on the obtained trip plan, a first update recommendation scheme corresponding to the trip plan to the vehicle, where the first update recommendation scheme indicates at least update information recommended to the vehicle. For a description of this part, refer to the foregoing embodiment. Details are not described herein again.

Refer to FIG. 6. FIG. 6 is a diagram of another update method according to an embodiment of this application. It should be noted that a trip plan in this embodiment is obtained from a device associated with a vehicle. As shown in FIG. 6, the serving end 102, for example, a server, receives data from a device associated with the vehicle 101. Then, the server obtains the trip plan based on the data.

The device associated with the vehicle is a device that can establish a communication connection with the vehicle 101, for example, the roadside device 104, an intersection radar, a base station that communicates with the vehicle, or a server that provides an intelligent driving strategy for the vehicle.

For example, a trip plan obtained from the roadside device 104 may be obtained through another device. This is not specifically limited in this solution.

Optionally, the device associated with the vehicle may further include an in-vehicle sensing device. The in-vehicle sensing device may be, for example, one or more of an in-vehicle camera, a millimeter-wave radar, a lidar, or an ultrasonic radar. The server may further obtain data through the in-vehicle sensing device. Then, the server obtains a first update recommendation scheme based on the data. For example, the server may sense, by using the in-vehicle camera, that a weather condition of an external environment corresponding to the vehicle is rainy and snowy, and then recommend information about an adapted software update package and the like.

The server sends, based on the obtained trip plan, a first update recommendation scheme corresponding to the trip plan to the vehicle, where the first update recommendation scheme indicates at least update information recommended to the vehicle. For a description of this part, refer to the foregoing embodiment. Details are not described herein again.

FIG. 7a is a schematic flowchart of another update method according to an embodiment of this application. Optionally, the method may be applied to an update system, for example, the update system shown in FIG. 1. The update method shown in FIG. 7a may include steps 701 to 707. It should be understood that, for ease of description, this application is described in a sequence of 701 to 707, but it is not intended to set a limitation that execution is necessarily performed in the foregoing sequence. An execution sequence, execution time, a quantity of execution times, and the like of the foregoing one or more steps are not limited in embodiments of this application. The following provides descriptions by using an example in which steps 701, 702, 704, and 705 of the update method are performed by a serving end (for example, the serving end 102) and steps 703, 706, and 707 of the update method are performed by a vehicle (for example, the vehicle 101). This application is also applicable to another execution body. Steps 701 to 707 are specifically as follows:
701: The serving end obtains a trip plan of the vehicle.

The trip plan includes a trip element.

The trip element may be one or more of a start date of a trip, an end date of the trip, a departure place of the trip, a destination of the trip, weather in the trip, a travel distance, driver information, passenger information, a goal of the trip, a usage purpose of the vehicle, time information corresponding to the usage purpose, and the like.

For a description of this step, refer to the description of the foregoing embodiment. Details are not described herein again.

702: The serving end sends a first update recommendation scheme corresponding to the trip plan.

The first update recommendation scheme indicates at least update information recommended to the vehicle.

The update information includes one or more of information about at least one software update package, information for indicating to download the at least one software update package, information for indicating to activate the at least one software update package, and information about at least one piece of hardware, the at least one software update package is a software update package recommended to be installed on the vehicle, and the at least one piece of hardware is hardware recommended to be installed on the vehicle.

The serving end obtains, based on the foregoing trip plan, the first update recommendation scheme corresponding to the trip plan, and then sends the first update recommendation scheme, to improve trip experience of a user corresponding to the trip plan.

For a description of this step, refer to the description of the foregoing embodiment. Details are not described herein again.

703: The vehicle receives the first update recommendation scheme corresponding to the trip plan of the vehicle.

For a description of step 703, refer to the description of the foregoing embodiment. Details are not described herein again.

704: The serving end determines an implementation strategy of the first update recommendation scheme.

The implementation strategy indicates implementation of the first update recommendation scheme. For example, the implementation strategy may indicate an update sequence position of a software update package. The software update package is included in an update package corresponding to the update information. In embodiments of this application, for example, the update package corresponding to the update information may be understood as an update package that meets a description of the update information.

The implementation strategy may indicate a download sequence position of a first software update package. The first software update package is included in the at least one software update package.

For another example, the implementation strategy indicates an installation sequence position of a first software update package. The first software update package is included in the at least one software update package.

For another example, the implementation strategy indicates an activation sequence position of a first software update package. The first software update package is included in the at least one software update package.

For another example, the implementation strategy indicates an installation sequence position of first hardware. The first hardware is hardware recommended to be installed on the vehicle.

**In** a possible implementation, the download sequence position of the first software update package is associated with a priority corresponding to the first software update package, time information of the trip plan, and update duration corresponding to the first software update package;
the installation sequence position of the first software update package is associated with the priority corresponding to the first software update package, the time information of the trip plan, and the update duration corresponding to the first software update package;
the activation sequence position of the first software update package is associated with the priority corresponding to the first software update package, the time information of the trip plan, and the update duration corresponding to the first software update package; and
the installation sequence position of the first hardware is associated with a priority corresponding to the first hardware and the time information of the trip plan.

The first software update package is included in the at least one software update package, and the first hardware is included in the at least one piece of hardware.

In another possible implementation, the download sequence position of the first software update package is associated with a priority corresponding to the first software update package, time information of the trip plan, and update duration corresponding to the first software update package; or
the installation sequence position of the first software update package is associated with a priority corresponding to the first software update package, time information of the trip plan, and update duration corresponding to the first software update package; or
the activation sequence position of the first software update package is associated with a priority corresponding to the first software update package, time information of the trip plan, and update duration corresponding to the first software update package; or
the installation sequence position of the first hardware is associated with a priority corresponding to the first hardware and time information of the trip plan.

The first software update package is included in the at least one software update package, and the first hardware is included in the at least one piece of hardware.

It should be noted that the first software update package may be one or more update packages in the at least one software update package. The first hardware may be one or more pieces of hardware in the at least one piece of hardware.

In the foregoing two examples, a priority corresponding to a software update package may be related to an importance degree of software corresponding to the software update package. The time information of the trip plan may be, for example, departure time. The update duration corresponding to the software update package is time required for completing update corresponding to the software update package.

Correspondingly, the serving end determines the implementation strategy of the first update recommendation scheme based on the priority of the software update package.

For another example, the serving end determines the implementation strategy of the first update recommendation scheme based on the start time of the trip, the priority of the software update package, and the update duration of the software update package.

The serving end may alternatively determine the implementation strategy of the first update recommendation scheme based on other information. This is not strictly limited in this solution.

705: The serving end sends the implementation strategy.

For example, based on the determined download sequence position, installation sequence position, and activation sequence position of the software update package and the determined installation sequence position of the hardware, the vehicle is indicated to download, install, and activate the software update package, and install the hardware.

For example, a first moment may be included in the implementation strategy. The first moment may be a moment at which the vehicle is recommended to start the trip plan. For example, the serving end sends information associated with the first moment. The first moment is a moment not earlier than a second moment. The second moment is an effective moment of a second software update package or second hardware. The second software update package is included in the at least one software update package, and the second hardware is included in the at least one piece of hardware.

Optionally, the first moment is a moment at which the vehicle is recommended to start the trip plan. For example, it is recommended to start the trip at "7 o'clock tomorrow morning", and "7 o'clock tomorrow morning" is the first moment.

For example, if the second software update package or the second hardware cannot take effect before departure of the trip, the vehicle may be recommended to postpone departure time.

There may be one or more second software update packages. For example, the second software update package may be some or all of the foregoing at least one software update package.

Correspondingly, there may be one or more pieces of second hardware. For example, the second hardware may be some or all of the foregoing at least one piece of hardware. This is not specifically limited in this solution.

In other words, the vehicle is recommended to start the trip after the second software update package or the second hardware takes effect. The take-effect may be understood as follows: For installation of a software update package, an effective moment of the software update package may be a moment of installing the software update package; for activation of a software update package, an effective moment of the software update package may be a moment of activating software; and for installation of hardware, an effective moment of the hardware may be a moment of completing the installation of the hardware.

It should be noted that, in a possible implementation, when there are a plurality of second software update packages, the second moment may be a moment at which all second software update packages take effect, that is, a moment at which all the second software update packages are completely installed or activated.

In a possible implementation, when there are a plurality of pieces of second hardware, the second moment may be a moment at which all second hardware takes effect, that is, a moment at which all the second hardware is completely installed.

In a possible implementation, the second moment may be a latest moment in effective moments of the second software update package and the second hardware. In other words, the vehicle departs after all the software update packages are completely installed or activated and all the hardware is completely installed.

It should be noted that the update recommendation scheme includes a plurality of pieces of software update package or hardware information. An effective moment corresponding to some software update package or hardware information may be the second moment, and other software update package or hardware information may not correspond to the second moment. This is not limited in this solution.

In a possible implementation, a priority of the second software update package is higher than or equal to a first priority; and/or a priority of the second hardware is higher than or equal to a second priority.

For example, if some software update packages have a relatively high installation level or importance level, or some hardware has a relatively high installation level or importance level, the vehicle is recommended to depart after the software update packages are installed or activated or depart after the hardware is installed. In this way, trip experience of the user can be effectively improved.

For example, the second software update package may be a software update package related to driver safety. For another example, the second software update package may be a software update package related to vehicle energy consumption. For another example, the second software update package may be a software update package that can reduce a driving burden. For another example, the second software update package may be a software update package that consumes a large amount of traffic when the software update package is downloaded. Optionally, a priority of another software update package other than the software update package related to driver safety, the software update package related to vehicle energy consumption, the software update package that can reduce a driving burden, and the software update package that consumes a large amount of traffic when the software update package is downloaded is set to level 1, and the software update package related to driver safety, the software update package related to vehicle energy consumption, the software update package that can reduce a driving burden, and the software update package that consumes a large amount of traffic when the software update package is downloaded are set to level 2. The level-2 priority is higher than the level-1 priority. Correspondingly, the first priority may be the level-2 priority. Certainly, there may be other division, and this is not strictly limited in this solution.

In a possible implementation, if hardware needs to be used to implement some software update packages, a priority of the hardware may be determined based on a priority of the software update package. For example, a priority of the software update package that can reduce a driving burden is relatively high, and implementation of such software needs to be based on installation of corresponding hardware on hardware plug-in interfaces of front, rear, and side sensors such as a LiDAR or a camera supported by the vehicle. In this case, a priority of the hardware is relatively high. For another software update package that needs to be implemented by using hardware and has a relatively low priority, a priority of the hardware corresponding to the software update package may be relatively low. Correspondingly, the second priority may be the priority of the hardware corresponding to the software update package that can reduce a driving burden.

In a possible implementation, priorities of all hardware that needs to be installed may be set to a highest priority. In this way, all the hardware can be installed before departure, to avoid that related hardware cannot be obtained in a remote place, a strange place, or the like, and installation of the related hardware cannot be completed.

The departure time of the trip is adjusted, so that the vehicle departs after a software update package or hardware with a high priority takes effect. In this way, trip safety of the user can be ensured.

For example, first information may be included in the foregoing implementation strategy. The first information indicates use end time of target software. For example, the serving end sends the first information. The use end time is associated with the time information of the trip plan, the target software corresponds to the target software update package, the target software update package is included in the software update package corresponding to the update information, and the target software update package is an installed and/or activated software update package.

For example, after the use end time, the target software is uninstalled or deactivated.

For another example, use start time and the use end time of the target software are set based on time of the trip. After the trip ends, the target software is disabled through uninstallation or the like. In this way, a computing resource, a memory size, and the like of the vehicle can be saved.

For example, a future use frequency of the target software may also be included in the foregoing implementation strategy. For example, total use time per year is 24 hours. The implementation strategy is set, so that total software use costs of the user can be reduced.

706: The vehicle receives the implementation strategy of the first update recommendation scheme.

It should be understood that a manner in which the serving end sends the implementation strategy may be direct sending, or may be indirect sending to the vehicle (through another device). For the direct sending manner and the indirect sending manner, refer to the description in step 203. Details are not described herein again.

707: The vehicle performs an update operation based on the first update recommendation scheme and the implementation strategy of the first update recommendation scheme.

The vehicle may determine an update sequence position of each software update package based on the received implementation strategy, and then perform update.

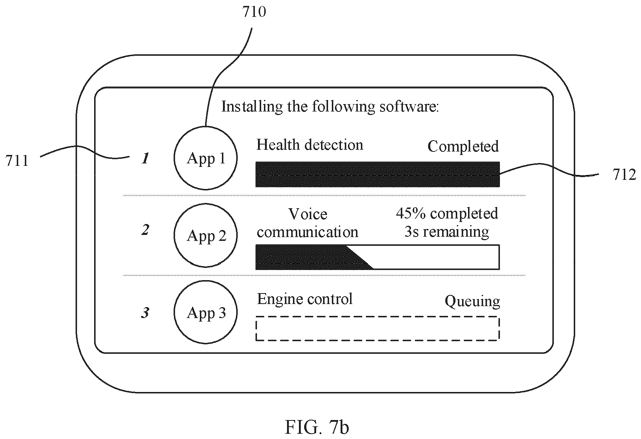

In a possible implementation, the vehicle may present the implementation strategy. For example, an interface of the update sequence position may be displayed on a central control display of the vehicle. FIG. 7b is a diagram of an update interface of a software update package. Optionally, an installation sequence position 711 of a health detection application 710 is the first, an installation sequence position of a voice communication application is the second, and an installation sequence position of an engine control application is the third. The interface further displays an installation progress of each software update package. For example, an installation progress 712 of the health detection application 710 is completed; an installation progress of the voice communication application is 45% completed, and it further takes 3s to complete installation; and an installation progress of the engine control application is queuing.

For a description of performing the update operation by the vehicle in this part, refer to the description in step 204. Details are not described herein again.

In embodiments of this application, the trip plan of the vehicle is obtained to obtain the update recommendation scheme corresponding to the trip plan, the implementation strategy of the update recommendation scheme is determined, and then the implementation strategy is sent to the vehicle. In this solution, update recommendation is actively implemented from a perspective of a trip, and the implementation strategy is obtained based on at least one of a download sequence position of a software update package, an installation sequence position of the software update package, an activation sequence position of the software update package, and an installation sequence position of hardware, so that the vehicle completes ordered update. In this way, based on a trip element of the user, different update information may be recommended based on different user trips, and it is ensured that the vehicle completes update orderly, thereby effectively improving trip experience of the user.

It should be noted that the at least one software update package corresponding to the update information in embodiments of this application may include one or more of the foregoing first software update package, second software update package, third software update package, fourth software update package, fifth software update package, sixth software update package, and seventh software update package. The first software update package and the second software update package may be any one or more of the at least one software update package. The third software update package, the fourth software update package, the fifth software update package, the sixth software update package, and the seventh software update package are update packages with different functions. Optionally, the first software update package, the second software update package, and the third software update package may be a same software update package. Alternatively, the first software update package, the second software update package, and the fourth software update package may be a same software update package. This is not strictly limited in this solution.

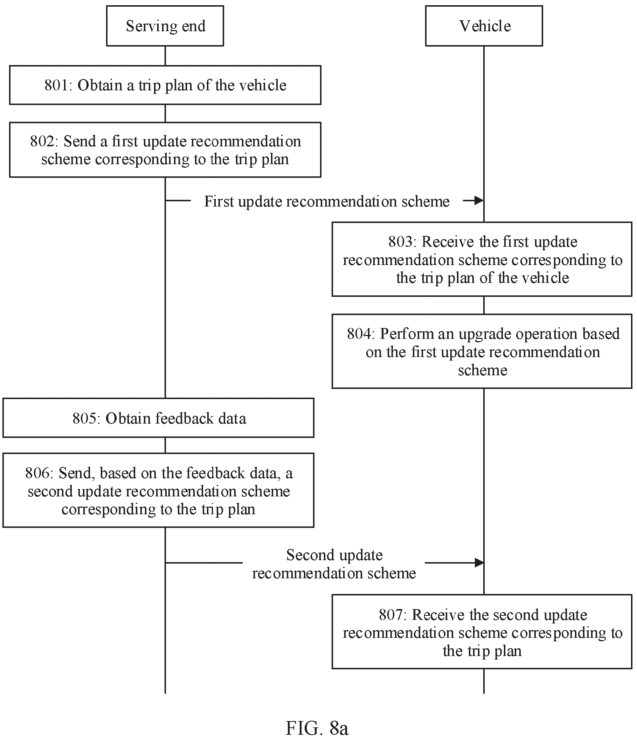

Based on the foregoing embodiments, FIG. 8a is a schematic flowchart of another update method according to an embodiment of this application. Optionally, the method may be applied to an update system, for example, the update system shown in FIG. 1. The update method shown in FIG. 8a may include steps 801 to 807. It should be understood that, for ease of description, this application is described in a sequence of 801 to 807, but it is not intended to set a limitation that execution is necessarily performed in the foregoing sequence. An execution sequence, execution time, a quantity of execution times, and the like of the foregoing one or more steps are not limited in embodiments of this application. The following provides descriptions by using an example in which steps 801, 802, 805, and 806 of the update method are performed by a serving end (for example, the serving end 102) and steps 803, 804, and 807 of the update method are performed by a vehicle (for example, the vehicle 101). This application is also applicable to another execution body. Steps 801 to 807 are specifically as follows:
801: The serving end obtains a trip plan of the vehicle.

The trip plan includes a trip element.

For a description of this step, refer to the description of the foregoing embodiment. Details are not described herein again.

802: The serving end sends a first update recommendation scheme corresponding to the trip plan.

The first update recommendation scheme indicates at least update information recommended to the vehicle.

The serving end (for example, a server) obtains, based on the foregoing trip plan, the first update recommendation scheme corresponding to the trip plan, and then sends the first update recommendation scheme to the vehicle, to improve trip experience of a user corresponding to the trip plan.

For a description of this step, refer to the description of the foregoing embodiment. Details are not described herein again.

803: The vehicle receives the first update recommendation scheme corresponding to the trip plan of the vehicle.

804: The vehicle performs an update operation based on the first update recommendation scheme.

For descriptions of step 803 and 804, refer to the description of the foregoing embodiment. Details are not described herein again.

805: The serving end obtains feedback data.

The feedback data indicates at least a status of the vehicle and/or a status of a passenger in the vehicle.

The status of the vehicle may be a status of the vehicle, or may be a driving status or the like. The status of the vehicle may be understood as, for example, a vehicle body integrity status (for example, one or more of vehicle component integrity or vehicle body integrity), a collision and abrasion status, or the like. The driving status may include, for example, an operation like emergency braking or emergency steering of the vehicle.

The status of the passenger in the vehicle may be, for example, a physical status, for example, an expression, a physical posture, or a voice in a state like comfort presented by the passenger.

In a possible implementation, the feedback data includes one or more of the following data:
sensing information of the vehicle, traveling data of the vehicle, or use information of target software.

For example, the sensing information of the vehicle includes one or more of sound information, image information, video information, or the like in the vehicle.

The sound information in the vehicle may be, for example, a speaking sound of a passenger or a driver, a sound of music or a video, and the like. The image information in the vehicle may be, for example, image information or video information captured by a vehicle camera in a traveling process. The image information or the video information may be image information or video information inside the vehicle, or may be image information or video information outside the vehicle. This is not specifically limited in this solution.

For example, the traveling data of the vehicle includes one or more of a quantity of abnormal driving operations, an occurrence frequency of an abnormal driving operation, energy consumption, or the like. The abnormal driving operation is an abnormal operation, an operation with a relatively high risk coefficient, or an operation that is prone to an accident in a driving process. For example, the abnormal driving operation may include one or more of emergency braking, emergency steering, or the like. In a specific process, whether an operation is an abnormal driving operation may be determined by using a pre-defined or preconfigured determining rule. The pre-definition may mean definition performed by an individual or an organization like a user, a vendor, or a standard organization. The foregoing energy consumption includes one or more of fuel consumption, power consumption, or the like.

For example, the target software corresponds to the target software update package, the target software update package is included in the software update package corresponding to the update information, and the target software update package is an installed and/or activated software update package.

For example, the use information of the target software includes one or more of implementation time, an implementation process, and an implementation result of each piece of software in the target software. For example, an example in which the target software is driver status detection and voice communication assistance software shown in FIG. 4b is used to describe the use information of the target software. Implementation time of the driver status detection and voice communication assistance software is total duration of invoking the driver status detection and voice communication assistance software by the vehicle in the trip. For example, if the software is invoked three times in the trip, and invocation duration is 5 min, 15 min, and 3 min respectively, the implementation time of the target software is 23 min. An implementation process of the driver status detection and voice communication assistance software is a processing process of performing driver status detection and voice communication when the vehicle invokes the driver status detection and voice communication assistance software in the trip. For example, the target software detects that the driver is in a mentally tired state at, for example, 1:00 p.m., and then communicates with the driver in terms of weather, hobbies, and the like. Communication duration is 10 min. The implementation result of the target software is that the driver adjusts a driving status by using the target software, and does not doze.

In another possible implementation, the feedback data may alternatively be directly fed back by the user. Optionally, the user directly feeds back, by using a terminal device, an update recommendation scheme for recommending to update the trip plan. Alternatively, the user performs feedback in a manner of scoring the update recommendation scheme by using a terminal device. For example, the terminal device displays a feedback interface, so that the user enters the feedback data.

806: The serving end sends, based on the feedback data, a second update recommendation scheme corresponding to the trip plan.

It may be understood that, in step 806, the second update recommendation scheme sent by the serving end is different from the first update recommendation scheme sent by the serving end in step 802. It should be noted that step 806 is an optional implementation.

For a manner in which the serving end sends the second update recommendation scheme, refer to the description in step 202. Details are not described herein again.

In a possible implementation, in step 806, that the serving end sends the second update recommendation scheme corresponding to the trip plan includes: The serving end updates an update recommendation scheme corresponding to the trip plan to obtain the second update recommendation scheme, and sends the updated update recommendation scheme (that is, the second update recommendation scheme) corresponding to the trip plan.

In another possible implementation, in step 806, that the serving end sends the second update recommendation scheme corresponding to the trip plan includes: The serving end generates the second update recommendation scheme based on the feedback data, and sends the second update recommendation scheme.

For example, the server obtains a time length of a physical status like an expression, a physical posture, or a voice in a comfortable state presented when one or more of the passenger, the driver, or the like use the target software in the trip, a proportion of the time length in trip time, a quantity of times of emergency braking and emergency steering that occur when the vehicle uses the corresponding target software in the trip, and a proportion of the quantity of times in a total quantity of operations.

The obtained proportion is compared with a preset threshold, and if the proportion of the comfortable state presented when the passenger uses the target software in the trip is greater than a preset threshold, the update recommendation scheme of the trip plan is not updated or not regenerated. If the proportion of the comfortable state presented when the passenger uses the target software in the trip is less than a preset threshold, the update recommendation scheme of the trip plan is updated, the second update recommendation scheme is generated, or the like. Alternatively, if the quantity of times of emergency braking and emergency steering that occur when the vehicle uses the corresponding target software in the trip, and the proportion of the quantity of times in the total quantity of operations are greater than preset thresholds, the update recommendation scheme of the trip plan is updated or the second update recommendation scheme is generated.

For another example, the serving end obtains the feedback data by receiving a feedback from user equipment. For example, if the serving end receives an update recommendation scheme that is directly fed back by the user and the is for recommending to update the trip plan, the serving end updates the update recommendation scheme of the trip plane. For another example, the serving end receives a score of the user for the update recommendation scheme, compares the score with a preset score, and then determines whether to update the update recommendation scheme or generate the second update recommendation scheme.

The foregoing is merely an example, and another manner may alternatively be used to determine whether to update the update recommendation scheme or generate the second update recommendation scheme. This is not specifically limited in this solution.

In a possible implementation, the serving end may update the update recommendation scheme or generate the second update recommendation scheme by changing a trip element type setting of the trip plan, updating a weight of setting each trip element, and/or the like. Certainly, another manner may alternatively be used. This is not specifically limited in this solution.

Optionally, when sending the second update recommendation scheme, the serving end may send only update information different from that of the first update recommendation scheme mentioned above, that is, send only a small amount of updated update information. Alternatively, the serving end may send an entire recommendation scheme, that is, a new update recommendation scheme. This is not strictly limited in this solution.

For example, in step 802, the first update recommendation scheme sent by the serving end includes information about a software update package A, information about a software update package B, and information about a software update package C. In step 806, the serving end updates, based on the feedback data, the update recommendation scheme corresponding to the trip plan to obtain the second update recommendation scheme, and sends the updated update recommendation scheme (that is, the second update recommendation scheme) corresponding to the trip plan. The second update recommendation scheme includes information about a software update package D. In step 806, the serving end may send only the information about the software update package D. Alternatively, the serving end may send the information about the software update package A, the information about the software update package B, the information about the software update package C, and the information about the software update package D.

For another example, in step 802, the first update recommendation scheme sent by the serving end includes information about a software update package A, information about a software update package B, and information about a software update package C. In step 806, the serving end generates, based on the feedback data, the second update recommendation scheme corresponding to the trip plan, and sends the second update recommendation scheme. The second update recommendation scheme includes the information about the software update package A and information about a software update package D. In step 806, the serving end may send only the information about the software update package D. Alternatively, the serving end may send the information about the software update package A and the information about the software update package D.

807: The vehicle receives the second update recommendation scheme corresponding to the trip plan.

For a description of receiving the update recommendation scheme by the vehicle, refer to the description in step 203. Details are not described herein again.

For example, when receiving the second update recommendation scheme, the vehicle may remind the user to choose whether to perform update.

If the user indicates that update needs to be performed, the vehicle performs an update operation based on the second update recommendation scheme. For a description of performing the update operation by the vehicle, refer to the description in step 204. Details are not described herein again.

If the user indicates that no update is required, the vehicle may not perform an update operation corresponding to the second update recommendation scheme.

In embodiments of this application, the trip plan of the vehicle is obtained to obtain the update recommendation scheme corresponding to the trip plan, the feedback data is obtained, and then the update recommendation scheme corresponding to the trip plan is updated. In this solution, update recommendation is actively implemented for a perspective of a trip, and the update recommendation scheme is continuously optimized based on the feedback data. In this way, based on a trip element of the user, different update information may be recommended based on different user trips, and the recommended update information can be more reliable and comprehensive by continuously optimizing an algorithm, thereby effectively improving trip experience of the user.

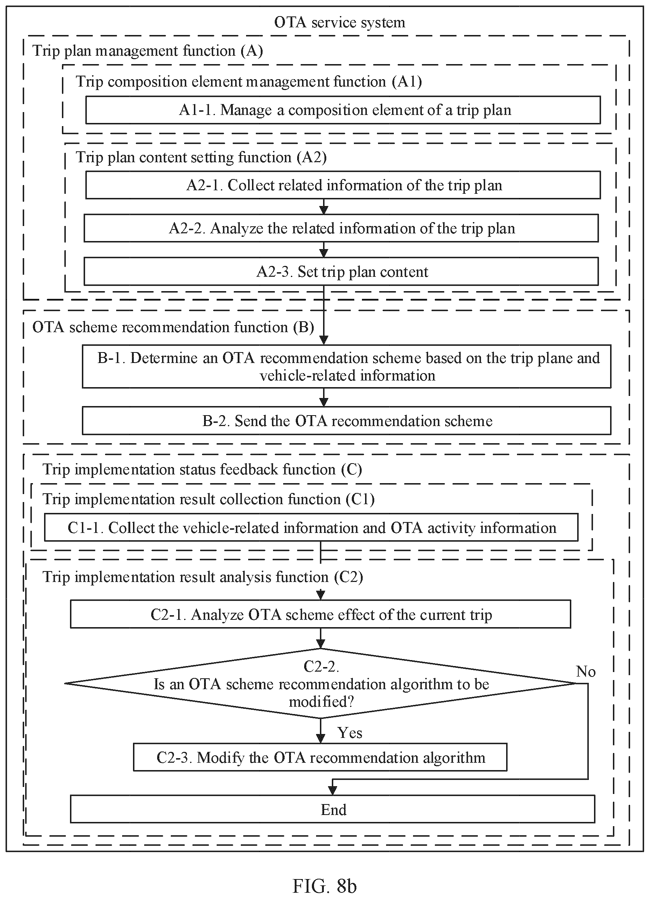

In a specific embodiment, FIG. 8b shows an OTA service system according to an embodiment of this application. The OTA service system may be, for example, the foregoing serving end 102 (for example, a server) in embodiments of this application. The OTA service system includes a trip plan management function A, an OTA scheme recommendation function B, and a trip implementation status feedback function C. The trip plan management function A may include a trip composition element management function A1 and a trip plan content setting function A2. The trip composition element management function A1 is used to manage a trip plan composition element. For example, a type of the trip plan composition element is set. The trip plan content setting function A2 is used to collect information related to a trip plan, analyze the information related to the trip plan, and set trip plan content. The OTA scheme recommendation function B is used to determine an OTA recommendation scheme based on a trip plan and vehicle-related information, and send the OTA recommendation scheme. For a description of this part, refer to the descriptions in steps 201 and 202. Details are not described herein again.

The trip implementation status feedback function C may include a trip implementation result collection function C1 and a trip implementation result analysis function C2. The trip implementation result collection function C1 is used to collect vehicle-related information and OTA activity information. The OTA activity information may be understood as the foregoing use information of the target software. The trip implementation result analysis function C2 is used to analyze OTA scheme effect of the current trip, and modify an OTA recommendation algorithm when it is determined that the OTA scheme recommendation algorithm needs to be modified. For a description of this part, refer to the descriptions in steps 805 and 806 in the embodiment shown in FIG. 8a. Details are not described herein again.

It should be noted that, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The foregoing describes in detail the method in embodiments of this application. The following provides an apparatus in embodiments of this application. It may be understood that, in apparatus embodiments of this application, division into a plurality of units or modules is merely logical division based on functions, and is not intended to limit a specific structure of an apparatus. In practice, some function modules may be subdivided into more function modules that are smaller, and some function modules may be combined into one function module. However, regardless of whether these function modules are subdivided or combined, a general procedure performed by the apparatus is the same. For example, some apparatuses include a receiving unit and a sending unit. In some designs, the sending unit and the receiving unit may be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus for implementing any one of the foregoing methods. For example, an update apparatus is provided, including units (or means) configured to implement steps performed by the serving end in any one of the foregoing methods. For another example, another update apparatus is further provided, including units (or means) configured to implement steps performed by the vehicle in any one of the foregoing methods.

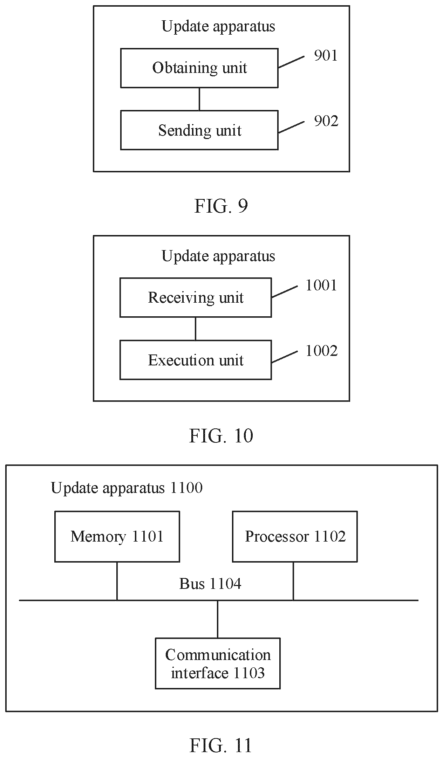

For example, FIG. 9 is a diagram of a structure of an update apparatus according to an embodiment of this application. The update recommendation apparatus is configured to implement the foregoing update method, for example, the update methods shown in FIG. 2, FIG. 7a, and FIG. 8a.

As shown in FIG. 9, the apparatus may include an obtaining unit 901 and a sending unit 902, which are specifically as follows:
The obtaining unit 901 is configured to obtain a trip plan of a vehicle, where the trip plan includes a trip element.

The sending unit 902 is configured to send a first update recommendation scheme corresponding to the trip plan, where the first update recommendation scheme indicates at least update information recommended to the vehicle.

For example, for a specific implementation of this part, refer to the content described in the foregoing steps 201 and 202. Details are not described herein again.

In a possible implementation, the update information includes one or more of information about at least one software update package, information for indicating to download the at least one software update package, information for indicating to activate the at least one software update package, and information about at least one piece of hardware, the at least one software update package is a software update package recommended to be installed on the vehicle, and the at least one piece of hardware is hardware recommended to be installed on the vehicle.

For example, for a specific implementation of this part, refer to the content of the embodiment shown in FIG. 2. Details are not described herein again.

In a possible implementation, the apparatus further includes a first determining unit, configured to:
determine the first update recommendation scheme based on the trip plan and information about the vehicle.

In a possible implementation, the trip element includes one or more of the following:
a start date of a trip, an end date of the trip, a departure place of the trip, a destination of the trip, weather in the trip, a travel distance, driver information, passenger information, a goal of the trip, and a usage purpose of the vehicle.

In a possible implementation, the information about the vehicle includes one or more of a vehicle model, a hardware configuration, a software configuration, and resource information.

In a possible implementation, the apparatus further includes a second determining unit, configured to:
determine an implementation strategy of the first update recommendation scheme, where the implementation strategy indicates at least one of a download sequence position of the at least one software update package, an installation sequence position of the at least one software update package, an activation sequence position of the at least one software update package, and an installation sequence position of the at least one piece of hardware, and the at least one software update package is included in an update package corresponding to the update information.

The sending unit 902 is further configured to send the implementation strategy to the vehicle.

It should be noted that, an implementation of each unit may further correspond to the corresponding description of the embodiment shown in FIG. 7a.

In a possible implementation, a download sequence position of a first software update package is associated with a priority corresponding to the first software update package, time information of the trip plan, and update duration corresponding to the first software update package; or
an installation sequence position of a first software update package is associated with a priority corresponding to the first software update package, time information of the trip plan, and update duration corresponding to the first software update package; or
an activation sequence position of a first software update package is associated with a priority corresponding to the first software update package, time information of the trip plan, and update duration corresponding to the first software update package; or
an installation sequence position of first hardware is associated with a priority corresponding to the first hardware and time information of the trip plan; and
the first software update package is included in the at least one software update package, and the first hardware is included in the at least one piece of hardware.

In a possible implementation, the sending unit 902 is further configured to:
send information associated with a first moment, where the first moment is a moment at which the vehicle is recommended to start the trip plan, the first moment is a moment not earlier than a second moment, the second moment is an effective moment of a second software update package or second hardware, the second software update package is included in the at least one software update package, and the second hardware is included in the at least one piece of hardware.

It should be noted that, an implementation of each unit may further correspond to the corresponding description of the embodiment shown in FIG. 7a.

In a possible implementation, the obtaining unit 901 is further configured to:
obtain feedback data, where the feedback data indicates at least a status of the vehicle and/or a status of a passenger in the vehicle; and
send, based on the feedback data, a second update recommendation scheme corresponding to the trip plan.

In a possible implementation, the feedback data includes one or more of the following data:
sensing information of the vehicle, traveling data of the vehicle, or use information of target software.

The sensing information of the vehicle includes one or more of sound information, image information, and video information in the vehicle.

The traveling data of the vehicle includes one or more of a quantity of abnormal driving operations, an occurrence frequency of an abnormal driving operation, and energy consumption, the abnormal driving operation includes one or more of emergency braking and emergency steering, and the energy consumption includes one or more of fuel consumption and power consumption.

The target software corresponds to a target software update package, the target software update package is included in the software update package corresponding to the update information, the target software update package is an installed and/or activated software update package, and the use information of the target software includes one or more of implementation time, an implementation process, and an implementation result of each piece of software in the target software.

It should be noted that, an implementation of each unit may further correspond to the corresponding description of the embodiment shown in FIG. 8a.

In a possible implementation, the trip element includes information indicating passenger health, the update information includes information about a third software update package, the third software update package is included in the at least one software update package, and the third software update package is at least used for life and health monitoring.

In a possible implementation, the trip element includes a trip element indicating that the vehicle is driven by a single person, the update information includes information about a fourth software update package, the fourth software update package is included in the at least one software update package, and the fourth software update package is at least used for driver status detection and/or voice communication.

In a possible implementation, the trip element includes a trip element indicating a travel route, the update information includes information about a fifth software update package, the fifth software update package is included in the at least one software update package, and the fifth software update package is at least used to implement assisted driving corresponding to the travel route.

In a possible implementation, the trip element includes a trip element indicating a passenger hobby, the update information includes information about a sixth software update package, the sixth software update package is included in the at least one software update package, and the sixth software update package is associated with the passenger hobby.

In a possible implementation, the update information includes information about a seventh software update package, the seventh software update package is included in the at least one software update package, a function corresponding to the seventh software update package is implemented based on a first hardware set of the vehicle, and the first hardware set includes target hardware that is supported by the vehicle and that is not configured.

In a possible implementation, the sending unit 902 is further configured to:
send first information, where the first information indicates use end time of the target software, the use end time is associated with the time information of the trip plan, the target software corresponds to the target software update package, the target software update package is included in the software update package corresponding to the update information, and the target software update package is an installed and/or activated software update package.

It should be noted that, an implementation of each unit may further correspond to the corresponding description of the embodiment shown in FIG. 7a.

In a possible implementation, the obtaining unit 901 is configured to:
receive data from one or more of user equipment, the vehicle, and a device associated with the vehicle; and
obtain the trip plan based on the data.

It should be noted that, an implementation of each unit may further correspond to the corresponding description of the embodiment shown in FIG. 2, FIG. 5, or FIG. 6.

For another example, FIG. 10 is a diagram of a structure of another update apparatus according to an embodiment of this application. As shown in FIG. 10, the update apparatus may include a receiving unit 1001 and an execution unit 1002, which are specifically as follows:

The receiving unit 1001 is configured to receive a first update recommendation scheme corresponding to a trip plan of a vehicle, where the first update recommendation scheme indicates at least update information recommended to the vehicle, the update information includes one or more of information about at least one software update package, information for indicating to download the at least one software update package, information for indicating to activate the at least one software update package, and information about at least one piece of hardware, the at least one software update package is a software update package recommended to be installed on the vehicle, and the at least one piece of hardware is hardware recommended to be installed on the vehicle.

The execution unit 1002 is configured to perform an update operation based on the first update recommendation scheme.

It should be noted that, an implementation of each unit may further correspond to the corresponding description of the embodiment shown in FIG. 2.

In a possible implementation, the first update recommendation scheme is associated with the trip plan and information about the vehicle.

In a possible implementation, a trip element includes one or more of the following:
a start date of a trip, an end date of the trip, a departure place of the trip, a destination of the trip, weather in the trip, a travel distance, driver information, passenger information, a goal of the trip, and a usage purpose of the vehicle.

In a possible implementation, the information about the vehicle includes one or more of a vehicle model, a hardware configuration, a software configuration, and resource information.

In a possible implementation, the receiving unit 1001 is further configured to:
receive an implementation strategy of the first update recommendation scheme, where the implementation strategy indicates at least one of a download sequence position of the at least one software update package, an installation sequence position of the at least one software update package, an activation sequence position of the at least one software update package, and an installation sequence position of the at least one piece of hardware, and the at least one software update package is included in an update package corresponding to the update information.

It should be noted that, an implementation of each unit may further correspond to the corresponding description of the embodiment shown in FIG. 7a.

In a possible implementation, a download sequence position of a first software update package is associated with a priority corresponding to the first software update package, time information of the trip plan, and update duration corresponding to the first software update package; or
an installation sequence position of a first software update package is associated with a priority corresponding to the first software update package, time information of the trip plan, and update duration corresponding to the first software update package; or
an activation sequence position of a first software update package is associated with a priority corresponding to the first software update package, time information of the trip plan, and update duration corresponding to the first software update package; or
an installation sequence position of first hardware is associated with a priority corresponding to the first hardware and time information of the trip plan; and
the first software update package is included in the at least one software update package, and the first hardware is included in the at least one piece of hardware.

In a possible implementation, the receiving unit 1001 is further configured to:
receive information associated with a first moment, where the first moment is a moment at which the vehicle is recommended to start the trip plan, the first moment is a moment not earlier than a second moment, the second moment is an effective moment of a second software update package or second hardware, the second software update package is included in the at least one software update package, and the second hardware is included in the at least one piece of hardware.

It should be noted that, an implementation of each unit may further correspond to the corresponding description of the embodiment shown in FIG. 7a.

In a possible implementation, the receiving unit 1001 is further configured to:
receive a second update recommendation scheme corresponding to the trip plan, where the second update recommendation scheme is associated with feedback data, and the feedback data indicates at least a status of the vehicle and/or a status of a passenger in the vehicle.

In a possible implementation, the feedback data includes one or more of the following data:
sensing information of the vehicle, traveling data of the vehicle, or use information of target software.

The sensing information of the vehicle includes one or more of sound information, image information, and video information in the vehicle.

The traveling data of the vehicle includes one or more of a quantity of abnormal driving operations, an occurrence frequency of an abnormal driving operation, and energy consumption, the abnormal driving operation includes one or more of emergency braking and emergency steering, and the energy consumption includes one or more of fuel consumption and power consumption.

The target software corresponds to a target software update package, the target software update package is included in the software update package corresponding to the update information, the target software update package is an installed and/or activated software update package, and the use information of the target software includes one or more of implementation time, an implementation process, and an implementation result of each piece of software in the target software.

In a possible implementation, the trip element includes information indicating passenger health, the update information includes information about a third software update package, the third software update package is included in the at least one software update package, and the third software update package is at least used for life and health monitoring.

In a possible implementation, the trip element includes a trip element indicating that the vehicle is driven by a single person, the update information includes information about a fourth software update package, the fourth software update package is included in the at least one software update package, and the fourth software update package is at least used for driver status detection and/or voice communication.

In a possible implementation, the trip element includes a trip element indicating a travel route, the update information includes information about a fifth software update package, the fifth software update package is included in the at least one software update package, and the fifth software update package is at least used to implement assisted driving corresponding to the travel route.

In a possible implementation, the trip element includes a trip element indicating a passenger hobby, the update information includes information about a sixth software update package, the sixth software update package is included in the at least one software update package, and the sixth software update package is associated with the passenger hobby.

In a possible implementation, the update information includes information about a seventh software update package, the seventh software update package is included in the at least one software update package, a function corresponding to the seventh software update package is implemented based on a first hardware set of the vehicle, and the first hardware set includes target hardware that is supported by the vehicle and that is not configured.

In a possible implementation, the receiving unit 1001 is further configured to:
receive first information, where the first information indicates use end time of the target software, the use end time is associated with the time information of the trip plan, the target software corresponds to the target software update package, the target software update package is included in the software update package corresponding to the update information, and the target software update package is an installed and/or activated software update package.

It should be noted that, an implementation of each unit may further correspond to the corresponding description of the embodiment shown in FIG. 7a.

In a possible implementation, the trip plan of the vehicle is associated with data from one or more of user equipment, the vehicle, and a device associated with the vehicle.

It should be understood that division into the units in the update apparatus is merely logical function division. During actual implementation, all or some of the units may be integrated into one physical entity, or may be physically separated. In addition, the unit in the update apparatus may be implemented in a form of invoking software by a processor. For example, the update apparatus includes a processor, the processor is connected to a memory, the memory stores instructions, and the processor invokes the instructions stored in the memory, to implement any one of the foregoing methods or functions of the units in the apparatus. The processor is, for example, a general-purpose processor like a central processing unit (central processing unit, CPU) or a microprocessor, and the memory is a memory inside the apparatus or a memory outside the apparatus. Alternatively, the unit in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and functions of some or all of the foregoing units are implemented by designing a logical relationship between elements in the circuit. For another example, in another implementation, the hardware circuit may be implemented by using a programmable logic device (programmable logic device, PLD). Using a field programmable gate array (field programmable gate array, FPGA) as an example, the field programmable gate array may include a large quantity of logic gate circuits, and a connection relationship between the logic gate circuits is configured by using a configuration file, to implement functions of some or all of the foregoing units. All the units of the foregoing apparatus may be implemented in a form of invoking software by a processor, or may be implemented in a form of a hardware circuit, or some of the units are implemented in a form of invoking software by a processor, and the remaining units are implemented in a form of a hardware circuit.

FIG. 11 is a diagram of a hardware structure of another update apparatus according to an embodiment of this application. The update apparatus 1100 (the apparatus 1100 may be specifically a computer device) shown in FIG. 11 includes a memory 1101, a processor 1102, a communication interface 1103, and a bus 1104. The memory 1101, the processor 1102, and the communication interface 1103 implement mutual communication connections through the bus 1104.

The memory 1101 may be a read-only memory (read-only memory, ROM), a static storage device, a dynamic storage device, or a random access memory (random access memory, RAM).

The memory 1101 may store a program. When the program stored in the memory 1101 is executed by the processor 1102, the processor 1102 and the communication interface 1103 are configured to perform the steps of the update method in embodiments of this application.

The processor 1102 is a circuit having a signal processing capability. In an implementation, the processor 1102 may be a circuit having an instruction reading and running capability, for example, a central processing unit CPU, a microprocessor, a graphics processing unit (graphics processing unit, GPU) (which may be understood as a microprocessor), or a digital signal processor (digital signal processor, DSP). In another implementation, the processor 1102 may implement a specific function by using a logical relationship between hardware circuits, and the logical relationship between hardware circuits is fixed or reconfigurable. For example, the processor 1102 is a hardware circuit, for example, an FPGA, implemented by an ASIC or a programmable logic device PLD. In the reconfigurable hardware circuit, a process in which the processor loads a configuration file to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). The processor 1102 is configured to execute a related program, to implement a function that needs to be performed by a unit in the update apparatus in embodiments of this application, or perform the update method in the method embodiments of this application.

It can be learned that the units in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated together and implemented in a form of a system-on-a-chip (system-on-a-chip, SOC). The SOC may include at least one processor, configured to implement any one of the foregoing methods or implement functions of the units of the apparatus. Types of the at least one processor may be different, for example, include a CPU and an FPGA, a CPU and an artificial intelligence processor, a CPU and a GPU, or the like.

The communication interface 1103 uses a transceiver apparatus, for example but not for limitation, a transceiver, to implement communication between the apparatus 1100 and another device or communication network. For example, data may be obtained through the communication interface 1103.

The bus 1104 may include a path for transmitting information between the components (for example, the memory 1101, the processor 1102, and the communication interface 1103) of the apparatus 1100.

It should be noted that, although the apparatus 1100 shown in FIG. 11 shows only the memory, the processor, and the communication interface, in a specific implementation process, a person skilled in the art should understand that the apparatus 1100 further includes another component necessary for implementing normal running. In addition, based on a specific requirement, a person skilled in the art should understand that the apparatus 1100 may further include hardware components for implementing other additional functions. In addition, a person skilled in the art should understand that the apparatus 1100 may include only components necessary for implementing embodiments of this application, but does not need to include all components shown in FIG. 11.

An embodiment of this application further provides an update system. The system includes the update apparatus in the embodiment shown in FIG. 9 and the update apparatus in the embodiment shown in FIG. 10.

An embodiment of this application further provides a chip. The chip includes a processor and an interface, and the processor is configured to read instructions through the interface, to perform one or more steps in the update method in the foregoing embodiments.

An embodiment of this application further provides a computer-readable storage medium. The computer-readable storage medium stores a computer program, and the computer program is used to implement one or more steps in the update method in the foregoing embodiments.

An embodiment of this application further provides a computer program product. When the computer program product runs on a computer, the computer is enabled to perform one or more steps in the update method in the foregoing embodiments.

It may be clearly understood by a person skilled in the art that, for the purpose of convenient and brief description, for a detailed working process of the foregoing described system, apparatus, and unit, refer to specific descriptions of a corresponding step process in the foregoing method embodiments. Details are not described herein again.

It should be understood that unless otherwise specified, "/" in descriptions of this application indicates an "or" relationship between associated objects. For example, A/B may indicate A or B. A and B may be singular or plural. In addition, in the descriptions of this application, unless otherwise specified, "a plurality of" means two or more. "At least one of the following items (pieces)" or a similar expression thereof refers to any combination of these items, including a single item (piece) or any combination of a plurality of items (pieces). For example, at least one of a, b, or c may represent a, b, c, a and b, a and c, b and c, or a, b, and c, where a, b, and c may be singular or plural. In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference. For example, a first software update package and a second software update package may be a same software update package. In addition, in embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present a related concept in a specific manner for ease of understanding.

In the several embodiments provided in this application, it should be understood that the disclosed system, apparatus, and method may be implemented in other manners. For example, division into the units is merely logical function division. In actual implementation, there may be another division manner. For example, a plurality of units or components may be combined or integrated into another system, or some features may be ignored or not performed. The displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a read-only memory (read-only memory, ROM); a random access memory (random access memory, RAM); a magnetic medium, for example, a floppy disk, a hard disk, a magnetic tape, or a magnetic disk; an optical medium, for example, a digital versatile disc (digital versatile disc, DVD); or a semiconductor medium, for example, a solid-state disk (solid-state disk, SSD).

The foregoing descriptions are only specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. An update method, comprising:
obtaining a trip plan of a vehicle, wherein the trip plan comprises a trip element; and
sending a first update recommendation scheme corresponding to the trip plan, wherein the first update recommendation scheme indicates at least update information recommended to the vehicle, the update information comprises one or more of information about at least one software update package, information for indicating to download the at least one software update package, information for indicating to activate the at least one software update package, and information about at least one piece of hardware, the at least one software update package is a software update package recommended to be installed on the vehicle, and the at least one piece of hardware is hardware recommended to be installed on the vehicle.

2. The method according to claim 1, wherein the method further comprises:
determining the first update recommendation scheme based on the trip plan and information about the vehicle.

3. The method according to claim 1 or 2, wherein the trip element comprises one or more of the following:
a start date of a trip, an end date of the trip, a departure place of the trip, a destination of the trip, weather in the trip, a travel distance, driver information, passenger information, a goal of the trip, and a usage purpose of the vehicle.

4. The method according to claim 2, wherein the information about the vehicle comprises one or more of a vehicle model, a hardware configuration, a software configuration, and resource information.

5. The method according to any one of claims 1 to 4, wherein the method further comprises:
determining an implementation strategy of the first update recommendation scheme, wherein the implementation strategy indicates one or more of a download sequence position of the at least one software update package, an installation sequence position of the at least one software update package, an activation sequence position of the at least one software update package, and an installation sequence position of the at least one piece of hardware, and the software update package is comprised in an update package corresponding to the update information; and
sending the implementation strategy to the vehicle.

6. The method according to claim 5, wherein
a download sequence position of a first software update package is associated with a priority corresponding to the first software update package, time information of the trip plan, and update duration corresponding to the first software update package; or
an installation sequence position of a first software update package is associated with a priority corresponding to the first software update package, time information of the trip plan, and update duration corresponding to the first software update package; or
an activation sequence position of a first software update package is associated with a priority corresponding to the first software update package, time information of the trip plan, and update duration corresponding to the first software update package; or
an installation sequence position of first hardware is associated with a priority corresponding to the first hardware and time information of the trip plan; and
the first software update package is comprised in the at least one software update package, and the first hardware is comprised in the at least one piece of hardware.

7. The method according to any one of claims 1 to 6, wherein the method further comprises:
sending information associated with a first moment, wherein the first moment is a moment at which the vehicle is recommended to start the trip plan, the first moment is a moment not earlier than a second moment, the second moment is an effective moment of a second software update package or second hardware, the second software update package is comprised in the at least one software update package, and the second hardware is comprised in the at least one piece of hardware.

8. The method according to any one of claims 1 to 7, wherein the method further comprises:
obtaining feedback data, wherein the feedback data indicates at least a status of the vehicle and/or a status of a passenger in the vehicle; and
sending, based on the feedback data, a second update recommendation scheme corresponding to the trip plan.

9. The method according to claim 8, wherein the feedback data comprises one or more of the following data:
sensing information of the vehicle, traveling data of the vehicle, or use information of target software, wherein
the sensing information of the vehicle comprises one or more of sound information, image information, and video information in the vehicle;
the traveling data of the vehicle comprises one or more of a quantity of abnormal driving operations, an occurrence frequency of an abnormal driving operation, and energy consumption, the abnormal driving operation comprises one or more of emergency braking and emergency steering, and the energy consumption comprises one or more of fuel consumption and power consumption; and
the target software corresponds to a target software update package, the target software update package is comprised in the software update package corresponding to the update information, the target software update package is an installed and/or activated software update package, and the use information of the target software comprises one or more of implementation time, an implementation process, and an implementation result of each piece of software in the target software.

10. The method according to any one of claims 1 to 9, wherein the trip element comprises information indicating passenger health, the update information comprises information about a third software update package, the third software update package is comprised in the at least one software update package, and the third software update package is at least used for life and health monitoring.

11. The method according to any one of claims 1 to 9, wherein the trip element comprises a trip element indicating that the vehicle is driven by a single person, the update information comprises information about a fourth software update package, the fourth software update package is comprised in the at least one software update package, and the fourth software update package is at least used for driver status detection and/or voice communication.

12. The method according to any one of claims 1 to 9, wherein the trip element comprises a trip element indicating a travel route, the update information comprises information about a fifth software update package, the fifth software update package is comprised in the at least one software update package, and the fifth software update package is at least used to implement assisted driving corresponding to the travel route.

13. The method according to any one of claims 1 to 9, wherein the trip element comprises a trip element indicating a passenger hobby, the update information comprises information about a sixth software update package, the sixth software update package is comprised in the at least one software update package, and the sixth software update package is associated with the passenger hobby.

14. The method according to any one of claims 1 to 13, wherein the update information comprises information about a seventh software update package, the seventh software update package is comprised in the at least one software update package, a function corresponding to the seventh software update package is implemented based on a first hardware set of the vehicle, and the first hardware set comprises target hardware that is supported by the vehicle and that is not configured.

15. The method according to any one of claims 1 to 14, wherein the method further comprises:
sending first information, wherein the first information indicates use end time of the target software, the use end time is associated with the time information of the trip plan, the target software corresponds to the target software update package, the target software update package is comprised in the software update package corresponding to the update information, and the target software update package is an installed and/or activated software update package.

16. The method according to any one of claims 1 to 15, wherein the obtaining a trip plan of a vehicle comprises:
receiving data from one or more of user equipment, the vehicle, and a device associated with the vehicle; and
obtaining the trip plan based on the data.

17. An update method, applied to a vehicle and comprising:
receiving a first update recommendation scheme corresponding to a trip plan of the vehicle, wherein the first update recommendation scheme indicates at least update information recommended to the vehicle, the update information comprises one or more of information about at least one software update package, information for indicating to download the at least one software update package, information for indicating to activate the at least one software update package, and information about at least one piece of hardware, the at least one software update package is a software update package recommended to be installed on the vehicle, and the at least one piece of hardware is hardware recommended to be installed on the vehicle; and
performing an update operation based on the first update recommendation scheme.

18. The method according to claim 17, wherein the first update recommendation scheme is associated with the trip plan and information about the vehicle.

19. The method according to claim 17 or 18, wherein the trip element comprises one or more of the following:
a start date of a trip, an end date of the trip, a departure place of the trip, a destination of the trip, weather in the trip, a travel distance, driver information, passenger information, a goal of the trip, and a usage purpose of the vehicle.

20. The method according to claim 18, wherein the information about the vehicle comprises one or more of a vehicle model, a hardware configuration, a software configuration, and resource information.

21. The method according to any one of claims 17 to 20, wherein the method further comprises:
receiving an implementation strategy of the first update recommendation scheme, wherein the implementation strategy indicates one or more of a download sequence position of the at least one software update package, an installation sequence position of the at least one software update package, an activation sequence position of the at least one software update package, and an installation sequence position of the at least one piece of hardware, and the software update package is comprised in an update package corresponding to the update information.

22. The method according to claim 21, wherein
a download sequence position of a first software update package is associated with a priority corresponding to the first software update package, time information of the trip plan, and update duration corresponding to the first software update package; or
an installation sequence position of a first software update package is associated with a priority corresponding to the first software update package, time information of the trip plan, and update duration corresponding to the first software update package; or
an activation sequence position of a first software update package is associated with a priority corresponding to the first software update package, time information of the trip plan, and update duration corresponding to the first software update package; or
an installation sequence position of first hardware is associated with a priority corresponding to the first hardware and time information of the trip plan; and
the first software update package is comprised in the at least one software update package, and the first hardware is comprised in the at least one piece of hardware.

23. The method according to any one of claims 17 to 22, wherein the method further comprises:
receiving information associated with a first moment, wherein the first moment is a moment at which the vehicle is recommended to start the trip plan, the first moment is a moment not earlier than a second moment, the second moment is an effective moment of a second software update package or second hardware, the second software update package is comprised in the at least one software update package, and the second hardware is comprised in the at least one piece of hardware.

24. The method according to any one of claims 17 to 23, wherein the method further comprises:
receiving a second update recommendation scheme corresponding to the trip plan, wherein the second update recommendation scheme is associated with feedback data, and the feedback data indicates at least a status of the vehicle and/or a status of a passenger in the vehicle.

25. The method according to claim 24, wherein the feedback data comprises one or more of the following data:
sensing information of the vehicle, traveling data of the vehicle, or use information of target software, wherein
the sensing information of the vehicle comprises one or more of sound information, image information, and video information in the vehicle;
the traveling data of the vehicle comprises one or more of a quantity of abnormal driving operations, an occurrence frequency of an abnormal driving operation, and energy consumption, the abnormal driving operation comprises one or more of emergency braking and emergency steering, and the energy consumption comprises one or more of fuel consumption and power consumption; and
the target software corresponds to a target software update package, the target software update package is comprised in the software update package corresponding to the update information, the target software update package is an installed and/or activated software update package, and the use information of the target software comprises one or more of implementation time, an implementation process, and an implementation result of each piece of software in the target software.

26. The method according to any one of claims 17 to 25, wherein the trip element comprises information indicating passenger health, the update information comprises information about a third software update package, the third software update package is comprised in the at least one software update package, and the third software update package is at least used for life and health monitoring.

27. The method according to any one of claims 17 to 25, wherein the trip element comprises a trip element indicating that the vehicle is driven by a single person, the update information comprises information about a fourth software update package, the fourth software update package is comprised in the at least one software update package, and the fourth software update package is at least used for driver status detection and/or voice communication.

28. The method according to any one of claims 17 to 25, wherein the trip element comprises a trip element indicating a travel route, the update information comprises information about a fifth software update package, the fifth software update package is comprised in the at least one software update package, and the fifth software update package is at least used to implement assisted driving corresponding to the travel route.

29. The method according to any one of claims 17 to 25, wherein the trip element comprises a trip element indicating a passenger hobby, the update information comprises information about a sixth software update package, the sixth software update package is comprised in the at least one software update package, and the sixth software update package is associated with the passenger hobby.

30. The method according to any one of claims 17 to 25, wherein the update information comprises information about a seventh software update package, the seventh software update package is comprised in the at least one software update package, a function corresponding to the seventh software update package is implemented based on a first hardware set of the vehicle, and the first hardware set comprises target hardware that is supported by the vehicle and that is not configured.

31. The method according to any one of claims 17 to 30, wherein the method further comprises:
receiving first information, wherein the first information indicates use end time of the target software, the use end time is associated with the time information of the trip plan, the target software corresponds to the target software update package, the target software update package is comprised in the software update package corresponding to the update information, and the target software update package is an installed and/or activated software update package.

32. The method according to any one of claims 17 to 31, wherein the trip plan of the vehicle is associated with data from one or more of user equipment, the vehicle, and a device associated with the vehicle.

33. An update apparatus, comprising:
an obtaining unit, configured to obtain a trip plan of a vehicle, wherein the trip plan comprises a trip element; and
a sending unit, configured to send a first update recommendation scheme corresponding to the trip plan, wherein the first update recommendation scheme indicates at least update information recommended to the vehicle, the update information comprises one or more of information about at least one software update package, information for indicating to download the at least one software update package, information for indicating to activate the at least one software update package, and information about at least one piece of hardware, the at least one software update package is a software update package recommended to be installed on the vehicle, and the at least one piece of hardware is hardware recommended to be installed on the vehicle.

34. The apparatus according to claim 33, wherein the apparatus further comprises a first determining unit, configured to:
determine the first update recommendation scheme based on the trip plan and information about the vehicle.

35. The apparatus according to claim 33 or 34, wherein the trip element comprises one or more of the following:
a start date of a trip, an end date of the trip, a departure place of the trip, a destination of the trip, weather in the trip, a travel distance, driver information, passenger information, a goal of the trip, and a usage purpose of the vehicle.

36. The apparatus according to claim 34, wherein the information about the vehicle comprises one or more of a vehicle model, a hardware configuration, a software configuration, and resource information.

37. The apparatus according to any one of claims 33 to 36, wherein the apparatus further comprises a second determining unit, configured to:
determine an implementation strategy of the first update recommendation scheme, wherein the implementation strategy indicates one or more of a download sequence position of the at least one software update package, an installation sequence position of the at least one software update package, an activation sequence position of the at least one software update package, and an installation sequence position of the at least one piece of hardware, and the software update package is comprised in an update package corresponding to the update information; and
the sending unit is further configured to send the implementation strategy to the vehicle.

38. The apparatus according to claim 37, wherein
a download sequence position of a first software update package is associated with a priority corresponding to the first software update package, time information of the trip plan, and update duration corresponding to the first software update package; or
an installation sequence position of a first software update package is associated with a priority corresponding to the first software update package, time information of the trip plan, and update duration corresponding to the first software update package; or
an activation sequence position of a first software update package is associated with a priority corresponding to the first software update package, time information of the trip plan, and update duration corresponding to the first software update package; or
an installation sequence position of first hardware is associated with a priority corresponding to the first hardware and time information of the trip plan; and
the first software update package is comprised in the at least one software update package, and the first hardware is comprised in the at least one piece of hardware.

39. The apparatus according to any one of claims 33 to 38, wherein the sending unit is further configured to:
send information associated with a first moment, wherein the first moment is a moment at which the vehicle is recommended to start the trip plan, the first moment is a moment not earlier than a second moment, the second moment is an effective moment of a second software update package or second hardware, the second software update package is comprised in the at least one software update package, and the second hardware is comprised in the at least one piece of hardware.

40. The apparatus according to any one of claims 33 to 39, wherein the obtaining unit is further configured to:
obtain feedback data, wherein the feedback data indicates at least a status of the vehicle and/or a status of a passenger in the vehicle; and
send, based on the feedback data, a second update recommendation scheme corresponding to the trip plan.

41. The apparatus according to claim 40, wherein the feedback data comprises one or more of the following data:
sensing information of the vehicle, traveling data of the vehicle, or use information of target software, wherein
the sensing information of the vehicle comprises one or more of sound information, image information, and video information in the vehicle;
the traveling data of the vehicle comprises one or more of a quantity of abnormal driving operations, an occurrence frequency of an abnormal driving operation, and energy consumption, the abnormal driving operation comprises one or more of emergency braking and emergency steering, and the energy consumption comprises one or more of fuel consumption and power consumption; and
the target software corresponds to a target software update package, the target software update package is comprised in the software update package corresponding to the update information, the target software update package is an installed and/or activated software update package, and the use information of the target software comprises one or more of implementation time, an implementation process, and an implementation result of each piece of software in the target software.

42. The apparatus according to any one of claims 33 to 41, wherein the trip element comprises information indicating passenger health, the update information comprises information about a third software update package, the third software update package is comprised in the at least one software update package, and the third software update package is at least used for life and health monitoring.

43. The apparatus according to any one of claims 33 to 42, wherein the trip element comprises a trip element indicating that the vehicle is driven by a single person, the update information comprises information about a fourth software update package, the fourth software update package is comprised in the at least one software update package, and the fourth software update package is at least used for driver status detection and/or voice communication.

44. The apparatus according to any one of claims 33 to 42, wherein the trip element comprises a trip element indicating a travel route, the update information comprises information about a fifth software update package, the fifth software update package is comprised in the at least one software update package, and the fifth software update package is at least used to implement assisted driving corresponding to the travel route.

45. The apparatus according to any one of claims 33 to 42, wherein the trip element comprises a trip element indicating a passenger hobby, the update information comprises information about a sixth software update package, the sixth software update package is comprised in the at least one software update package, and the sixth software update package is associated with the passenger hobby.

46. The apparatus according to any one of claims 33 to 42, wherein the update information comprises information about a seventh software update package, the seventh software update package is comprised in the at least one software update package, a function corresponding to the seventh software update package is implemented based on a first hardware set of the vehicle, and the first hardware set comprises target hardware that is supported by the vehicle and that is not configured.

47. The apparatus according to any one of claims 33 to 46, wherein the sending unit is further configured to:
send first information, wherein the first information indicates use end time of the target software, the use end time is associated with the time information of the trip plan, the target software corresponds to the target software update package, the target software update package is comprised in the software update package corresponding to the update information, and the target software update package is an installed and/or activated software update package.

48. The apparatus according to any one of claims 33 to 47, wherein the obtaining unit is configured to:
receive data from one or more of user equipment, the vehicle, and a device associated with the vehicle; and
obtain the trip plan based on the data.

49. An update apparatus, comprising:
a receiving unit, configured to receive a first update recommendation scheme corresponding to a trip plan of a vehicle, wherein the first update recommendation scheme indicates at least update information recommended to the vehicle, the update information comprises one or more of information about at least one software update package, information for indicating to download the at least one software update package, information for indicating to activate the at least one software update package, and information about at least one piece of hardware, the at least one software update package is a software update package recommended to be installed on the vehicle, and the at least one piece of hardware is hardware recommended to be installed on the vehicle; and
an execution unit, configured to perform an update operation based on the first update recommendation scheme.

50. The apparatus according to claim 49, wherein the first update recommendation scheme is associated with the trip plan and information about the vehicle.

51. The apparatus according to claim 49 or 50, wherein the trip element comprises one or more of the following:
a start date of a trip, an end date of the trip, a departure place of the trip, a destination of the trip, weather in the trip, a travel distance, driver information, passenger information, a goal of the trip, and a usage purpose of the vehicle.

52. The apparatus according to claim 50, wherein the information about the vehicle comprises one or more of a vehicle model, a hardware configuration, a software configuration, and resource information.

53. The apparatus according to any one of claims 49 to 52, wherein the receiving unit is further configured to:
receive an implementation strategy of the first update recommendation scheme, wherein the implementation strategy indicates one or more of a download sequence position of the at least one software update package, an installation sequence position of the at least one software update package, an activation sequence position of the at least one software update package, and an installation sequence position of the at least one piece of hardware, and the software update package is comprised in an update package corresponding to the update information.

54. The apparatus according to claim 53, wherein
a download sequence position of a first software update package is associated with a priority corresponding to the first software update package, time information of the trip plan, and update duration corresponding to the first software update package; or
an installation sequence position of a first software update package is associated with a priority corresponding to the first software update package, time information of the trip plan, and update duration corresponding to the first software update package; or
an activation sequence position of a first software update package is associated with a priority corresponding to the first software update package, time information of the trip plan, and update duration corresponding to the first software update package; or
an installation sequence position of first hardware is associated with a priority corresponding to the first hardware and time information of the trip plan; and
the first software update package is comprised in the at least one software update package, and the first hardware is comprised in the at least one piece of hardware.

55. The apparatus according to any one of claims 49 to 54, wherein the receiving unit is further configured to:
receive information associated with a first moment, wherein the first moment is a moment at which the vehicle is recommended to start the trip plan, the first moment is a moment not earlier than a second moment, the second moment is an effective moment of a second software update package or second hardware, the second software update package is comprised in the at least one software update package, and the second hardware is comprised in the at least one piece of hardware.

56. The apparatus according to any one of claims 49 to 55, wherein the receiving unit is further configured to:
receive a second update recommendation scheme corresponding to the trip plan, wherein the second update recommendation scheme is associated with feedback data, and the feedback data indicates at least a status of the vehicle and/or a status of a passenger in the vehicle.

57. The apparatus according to claim 56, wherein the feedback data comprises one or more of the following data:
sensing information of the vehicle, traveling data of the vehicle, or use information of target software, wherein
the sensing information of the vehicle comprises one or more of sound information, image information, and video information in the vehicle;
the traveling data of the vehicle comprises one or more of a quantity of abnormal driving operations, an occurrence frequency of an abnormal driving operation, and energy consumption, the abnormal driving operation comprises one or more of emergency braking and emergency steering, and the energy consumption comprises one or more of fuel consumption and power consumption; and
the target software corresponds to a target software update package, the target software update package is comprised in the software update package corresponding to the update information, the target software update package is an installed and/or activated software update package, and the use information of the target software comprises one or more of implementation time, an implementation process, and an implementation result of each piece of software in the target software.

58. The apparatus according to any one of claims 49 to 57, wherein the trip element comprises information indicating passenger health, the update information comprises information about a third software update package, the third software update package is comprised in the at least one software update package, and the third software update package is at least used for life and health monitoring.

59. The apparatus according to any one of claims 49 to 57, wherein the trip element comprises a trip element indicating that the vehicle is driven by a single person, the update information comprises information about a fourth software update package, the fourth software update package is comprised in the at least one software update package, and the fourth software update package is at least used for driver status detection and/or voice communication.

60. The apparatus according to any one of claims 49 to 57, wherein the trip element comprises a trip element indicating a travel route, the update information comprises information about a fifth software update package, the fifth software update package is comprised in the at least one software update package, and the fifth software update package is at least used to implement assisted driving corresponding to the travel route.

61. The apparatus according to any one of claims 49 to 57, wherein the trip element comprises a trip element indicating a passenger hobby, the update information comprises information about a sixth software update package, the sixth software update package is comprised in the at least one software update package, and the sixth software update package is associated with the passenger hobby.

62. The apparatus according to any one of claims 49 to 57, wherein the update information comprises information about a seventh software update package, the seventh software update package is comprised in the at least one software update package, a function corresponding to the seventh software update package is implemented based on a first hardware set of the vehicle, and the first hardware set comprises target hardware that is supported by the vehicle and that is not configured.

63. The apparatus according to any one of claims 49 to 62, wherein the receiving unit is further configured to:
receive first information, wherein the first information indicates use end time of the target software, the use end time is associated with the time information of the trip plan, the target software corresponds to the target software update package, the target software update package is comprised in the software update package corresponding to the update information, and the target software update package is an installed and/or activated software update package.

64. The apparatus according to any one of claims 49 to 63, wherein the trip plan of the vehicle is associated with data from one or more of user equipment, the vehicle, and a device associated with the vehicle.

65. An update system, wherein the system comprises the update apparatus according to any one of claims 33 to 48 and the update apparatus according to any one of claims 49 to 64.

66. An update apparatus, comprising a processor and a communication interface, wherein the communication interface is configured to receive and/or send data, and/or the communication interface is configured to provide input and/or output for the processor, and the processor is configured to invoke computer instructions, to implement the method according to any one of claims 1 to 16, or implement the method according to any one of claims 17 to 32.

67. An update system, wherein the system comprises a server and a vehicle, wherein
the server is configured to implement the update method according to any one of claims 1 to 16, and the vehicle is configured to implement the update method according to any one of claims 17 to 32.

68. A chip, wherein the chip comprises a processor and an interface, and the processor is configured to read instructions through the interface, to perform the method according to any one of claims 1 to 16, or implement the method according to any one of claims 17 to 32.

69. A computer-readable storage medium, wherein the computer-readable storage medium stores a computer program, and the computer program is used to implement the method according to any one of claims 1 to 16, or implement the method according to any one of claims 17 to 32.

70. A computer program product, wherein when the computer program product runs on a computer, the computer is configured to implement the method according to any one of claims 1 to 16, or implement the method according to any one of claims 17 to 32.
